# EUROPÄISCHE PATENTSCHRIFT

(11) **EP 4 498 040 B1**
(45) Veröffentlichungstag und Bekanntmachung des Hinweises auf die Patenterteilung: **08.04.2026**
(21) Anmeldenummer: 23187589.9
(22) Anmeldetag: 25.07.2023
(51) Int. Cl.: G01C 21/20, B66F 9/075, G01C 21/00, G01S 17/89

(54) **VERFAHREN UND VORRICHTUNG ZUM ERZEUGEN EINER LOKALISIERUNGSKARTE SOWIE ZUM AKTUALISIEREN DIESER LOKALISIERUNGSKARTE**
METHOD AND DEVICE FOR CREATING A LOCALIZATION MAP AND UPDATING SAID LOCALIZATION MAP
PROCÉDÉ ET DISPOSITIF DE PRODUCTION D'UNE CARTE DE LOCALISATION ET DE MISE À JOUR DE LADITE CARTE DE LOCALISATION

(43) Veröffentlichungstag der Anmeldung: 29.01.2025
(73) Patentinhaber: Jungheinrich Aktiengesellschaft, 22047 Hamburg (DE)
(72) Erfinder: Schwaiger, Martin, 82490 Farchat (DE); Willeit, Robert, 85368 Moosburg (DE); Pannen, Tessa, 85354 Freising (DE)
(74) Vertreter: Seemann & Partner Patentanwälte mbB

(56) Entgegenhaltungen:
- DE-A1- 102021 130 631

## Beschreibung

Die Erfindung betrifft ein Verfahren zum Erzeugen einer Lokalisierungskarte für die Positionsbestimmung eines Flurförderzeugs in einer Logistikeinrichtung, bei dem eine Umgebungskarte eines Erfassungsbereichs der Logistikeinrichtung durch Scannen von in dem Erfassungsbereich vorhandenen Objekten erzeugt wird. Ferner betrifft die Erfindung ein Verfahren zum Aktualisieren einer solchen Lokalisierungskarte.

Die Erfindung betrifft ebenso eine Vorrichtung zum Erzeugen einer Lokalisierungskarte für die Positionsbestimmung eines Flurförderzeugs in einer Logistikeinrichtung, welche eine Scanvorrichtung zum Erzeugen einer Umgebungskarte eines Erfassungsbereichs der Logistikeinrichtung aufweist, wobei die Scanvorrichtung eingerichtet ist, in dem Erfassungsbereich vorhandene Objekte zu scannen. Ferner betrifft die Erfindung eine Vorrichtung zum Aktualisieren dieser Lokalisierungskarte.

Lokalisierungskarten sind für den autonomen oder teilautonomen Betrieb von Flurförderzeugen in Logistikeinrichtungen von Bedeutung. Als Lokalisierungskarten können Karten eingesetzt werden, die mit einer Scanvorrichtung, beispielsweise einem Laserscanner, erfasst werden. Es wird ein Erfassungsbereich der Logistikeinrichtung gescannt, also beispielsweise ein Bereich, in dem ein autonomer oder teilautonomer Betrieb eines Flurförderzeugs stattfinden soll. Dieser Erfassungsbereich ist vielfach ein Teilbereich der Logistikeinrichtung. Die gescannte Umgebungskarte ist vielfach eine Punktwolke , anhand derer das Flurförderzeug seine eigene Position in der Logistikeinrichtung bestimmen kann.

Mittels Scanverfahren gewonnene Karten weisen unvermeidbar Ungenauigkeiten auf. Diese können sich negativ auf die erreichbare Genauigkeit der auf der Grundlage solcher Karten berechneten Position auswirken. Aus der EP 3 612 906 B1 ist ein System bekannt, bei dem eine gescannte Karte anhand von Markierungen, deren Positionen in der Logistikeinrichtung bekannt sind, korrigiert werden. Solche Markierungen, denen eine genaue Position zugewiesen ist, müssen jedoch zuvor eingemessen werden. Dies ist nur mit erheblichem Aufwand möglich. Einen weiteren technischen Ansatz hierzu verfolgt das System, welches aus der US 2011/0178668 A1 bekannt ist. Mit der aus diesem Dokument bekannten Einheit können in der gescannten Umgebungskarte manuelle Korrekturen vorgenommen werden, welche die Qualität der Umgebungskarte verbessern. Eine solche manuelle Korrektur ist jedoch ebenfalls aufwendig und außerdem nur in bestimmten Grenzen genau, da die korrigierte Position durch eine von einem Benutzer vorgenommene Eingabe bestimmt ist.

Das Dokument DE102021130631 A1 betrifft ein Verfahren zur Navigation eines Flurförderzeugs mit einer Sensorik zur Erkennung von Informationen im Betriebsbereich des Flurförderzeugs und einer Datenverarbeitungseinrichtung zur Auswertung dieser Informationen und Erstellung von Navigationsanweisungen und/oder Steuerungsbefehlen zur Navigation des Flurförderzeugs.

Es ist eine Aufgabe der Erfindung, eine Vorrichtung sowie ein Verfahren zum Erzeugen einer Lokalisierungskarte für die Positionsbestimmung eines Flurförderzeugs in einer Logistikeinrichtung sowie ein Verfahren und eine Vorrichtung zum Aktualisieren einer solchen Lokalisierungskarte anzugeben, wobei mit verringertem Aufwand eine Lokalisierungskarte mit höherer Genauigkeit bereitgestellt werden soll.

Die Aufgabe wird gelöst durch ein Verfahren zum Erzeugen einer Lokalisierungskarte für die Positionsbestimmung eines Flurförderzeugs in einer Logistikeinrichtung, wobei das Verfahren den folgenden Schritt aufweist:
a) Erzeugen einer Umgebungskarte eines Erfassungsbereichs der Logistikeinrichtung durch Scannen von in dem Erfassungsbereich vorhandenen Objekten,
und wobei dieses Verfahren durch die folgenden weiteren Schritte fortgebildet ist:
b) Erfassen einer maßstabsgerechten Karte zumindest des Erfassungsbereichs, wobei in der maßstabsgerechten Karte konstruktiv ortsfeste Merkmale vorhanden sind,
c) Anzeigen der erzeugten Umgebungskarte und der maßstabsgerechten Karte auf einer Anzeigevorrichtung,
d) Erfassen eines Korrekturbefehls betreffend eine Zuordnung zwischen einem in der Umgebungskarte vorhandenen Objekt und einem in der maßstabsgerechten Karte vorhandenen konstruktiv ortsfesten Merkmal,
e) Erzeugen einer Korrekturmatrix, insbesondere für in der Umgebungskarte an verzerrter Position dargestellte Objekte, wobei durch Anwendung der Korrekturmatrix auf eine gescannte Position des in der Umgebungskarte vorhandenen Objekts, welches dem konstruktiv ortsfesten Merkmal in Schritt d) zugewiesen wurde, diese gescannte Position in eine maßstabsgerechte Position des konstruktiv ortsfesten Merkmals, wie sie in der maßstabsgerechten Karte enthalten ist, überführbar ist,
f) Durchführen der Schritte d) und e) zumindest für ein in der Umgebungskarte vorhandenes erstes Objekt und für ein in der Umgebungskarte vorhandenes zweites Objekt,
g) Entzerren der Umgebungskarte anhand zumindest einer für das erste Objekt erzeugten ersten Korrekturmatrix und einer für das zweite Objekt erzeugten zweiten Korrekturmatrix,
h) Ausgeben der in Schritt g) entzerrten Umgebungskarte als Lokalisierungskarte für die Positionsbestimmung des Flurförderzeugs in der Logistikeinrichtung.

In Schritt c) erfolgt das Anzeigen der erzeugten Umgebungskarte und der maßstabsgerechten Karte auf der Anzeigevorrichtung beispielsweise, in dem die Umgebungskarte und die maßstabsgerechte Karte nebeneinander angezeigt werden. Ferner kann vorgesehen sein, dass die Umgebungskarte und die maßstabsgerechte Karte in Überlagerung, also als eine gemeinsame überlagerte Karte, dargestellt werden. Um die Erfassung des Korrekturbefehls in Schritt d) zu erleichtern, werden die Umgebungskarte und die maßstabsgerechte Karte insbesondere gleichzeitig angezeigt.

Der Schritt d) umfasst insbesondere ein Auswählen des Objekts in der Umgebungskarte und ein zugeordnetes Auswählen eines in der maßstabsgerechten Karte vorhandenen konstruktiv ortsfesten Merkmals der Logistikeinrichtung.

In Schritt e) wird eine Korrekturmatrix insbesondere für die in der Umgebungskarte an verzerrter Position dargestellten Objekte erstellt. Für Objekte, welche in der Umgebungskarte an nicht verzerrter Position dargestellt sind, sich also beispielsweise zumindest näherungsweise und insbesondere vollständig an der in der maßstabsgerechten Karte dargestellten maßstabsgerechten Position befinden, kann eine Korrekturmatrix erstellt werden, dies muss jedoch nicht zwangsläufig erfolgen. Wir für solche korrekt dargestellten Objekte eine Korrekturmatrix erzeugt, so kann diese die Information enthalten, dass keine Veränderung der gescannten Position erforderlich ist, um diese in die maßstabsgerechte Position zu überführen. Beispielsweise kann es sich bei einer solchen Korrekturmatrix um eine Einheitsmatrix handeln oder um eine Korrekturmatrix, in der Einträge vorhanden sind, welche angeben, dass beispielsweise keine Verschiebung und/oder Rotation des dargestellten Objekts erfolgt. Eine solche Korrekturmatrix enthält jedoch insbesondere die Information, dass bei der in Schritt g) durchgeführten Entzerrung der Umgebungskarte die gescannte Position des an der korrekten Position dargestellte Objekts nicht verändert wird, das Objekt also am in der gescannten Umgebungskarte dargestellten Ort verbleibt.

Der Schritt g) des Entzerrens der Umgebungskarte umfasst insbesondere das Stauchen und/oder Strecken der Umgebungskarte in beliebige Richtungen. Ferner kann der Schritt des Entzerrens insbesondere ein Drehen und/oder Verschieben der Umgebungskarte umfassen. Auch eine Kombination dieser Operationen kann durchgeführt werden, beispielsweise eine Dehnstreckung. Ferner können die genannten Operationen auf die Umgebungskarte als Ganzes oder auf Abschnitte der Umgebungskarte angewendet werden, dies gilt auch für die Kombination der genannten Operationen.

Es ist ferner insbesondere vorgesehen, dass in den Schritten e) und f) mehr als zwei Korrekturmatrizen erzeugt werden. Die in Schritt g) anschließend durchgeführte Entzerrung der Umgebungskarte kann insbesondere auf der Grundlage aller dieser Korrekturmatrizen durchgeführt werden.

Gemäß einer weiteren Ausführungsform ist vorgesehen, dass in Schritt a) die Umgebungskarte eines Erfassungsbereichs der Logistikeinrichtung erzeugt wird, indem eine Mehrzahl von Einzelscans erfasst werden, wobei in zumindest einigen dieser Einzelscans in dem Erfassungsbereich vorhandene Objekte abgebildet sind. Jedem der Einzelscans ist eine Pose des Flurförderzeugs zugewiesen, wobei der Einzelscan an der zugewiesenen Pose aufgenommen wird und die Mehrzahl, insbesondere die Verkettung der Posen, ferner insbesondere die Verkettung aller Posen einer Messfahrt, eine Trajektorie bilden. In Schritt g) erfolgt das Entzerren der Umgebungskarte ferner insbesondere, indem die Posen, an denen im Rahmen der Erzeugung der Umgebungskarte Einzelscans aufgenommen wurden, wobei die Einzelscans zu der Umgebungskarte zusammengefügt werden, auf der Grundlage der Korrekturmatrizen korrigiert werden.

Insbesondere werden Posen korrigiert, deren zugehörige Einzelscans kein Objekt umfassen, welches einem konstruktiv ortsfesten Merkmal zugeordnet werden kann. Diese weiteren Posen können im Rahmen der Entzerrung der Umgebungskarte wie folgt korrigiert werden.

Die weiteren Posen liegen auf der Trajektorie zwischen einer Pose, deren Einzelscan das erste Objekt umfasst und einer weiteren Pose, deren Einzelscan das zweite Objekt umfasst. Für die erste Pose kann die erste Korrekturmatrix bestimmt werden, für die zweite Pose kann die zweite Korrekturmatrix bestimmt werden. Für die auf der Trajektorie zwischen der ersten und der zweiten Pose liegenden weiteren Posen können aus der ersten und der zweite Korrekturmatrix, beispielsweise durch Interpolation, weitere Korrekturmatrizen bestimmt werden. Durch Anwendung dieser weiteren Korrekturmatrizen auf die weiteren Posen kann die Entzerrung der Umgebungskarte durchgeführt werden.

Insbesondere enthält die maßstabsgerechte Karte ausschließlich immobile Objekte, ferner insbesondere Objekte, die fest mit einem Gebäude der Logistikeinrichtung verbunden und ferner insbesondere fest in die Gebäudestruktur integriert sind, wie beispielsweise Träger, Tore und/oder Wände. Fest in die Gebäudestruktur integriert ist ein Objekt, wenn es sich nicht ohne umfangreiche bauliche Maßnahmen verändern oder entfernen lässt oder wenn das Objekt ein für die Statik des Gebäudes relevantes Objekt ist, wie beispielsweise ein Träger, eine tragende Wand oder eine Säule. Beispielsweise sind aber auch die Position(en) von Regalen und anderen fest verbauten Logistikobjekten in der maßstabsgerechten Karte verzeichnet und können in dieser immobile Objekte sein.

Vorteilhaft kann mit einem solchen Verfahren eine Lokalisierungskarte erzeugt und bereitgestellt werden, welche als Grundlage für die Positionsbestimmung eines Flurförderzeugs in der Logistikeinrichtung dient und im Vergleich zu herkömmlichen gescannten Karten eine höhere Genauigkeit aufweist. Die Lokalisierungskarte dient insbesondere der Positionsbestimmung des Flurförderzeugs in der Logistikeinrichtung. Für die Navigation des Flurförderzeugs kann eine davon seprate Navigationskarte vorhanden sein, in der beispielsweise die Fahrbereiche des Flurförderzeugs definiert sind. Gegenüber der Verwendung von Lokalisierungskarten, welche beispielsweise ausschließlich auf maßstabsgerechten Karten aufgebaut sind, umfasst die Scankarte mehr Details, insbesondere auch nicht ortsfeste oder nicht immobile Objekte, was eine exaktere Positionsbestimmung des Flurförderzeugs in der Logistikeinrichtung erlaubt. Es ist vorteilhaft nicht erforderlich, mehr als eine Karte zur Positionsbestimmung des Flurförderzeugs in der Logistikeinrichtung zu verwenden und beispielsweise durch einen Vergleich oder Abgleich dieser Mehrzahl von Karten die Genauigkeit der Positionsbestimmung zu erhöhen.

Auch wird mit dem Verfahren gemäß Aspekten der Erfindung eine vorteilhafte Erzeugung einer Umgebungskarte im Vergleich zu Verfahren ermöglicht, bei denen die erfasste Umgebung vollständig mit einer maßstabsgerechten Karte abgeglichen würde. Grund hierfür ist, dass zum einen die Logistikeinrichtung eine hochdynamische Umgebung ist, die sich durch Bewegen und Neuplatzieren von Objekten laufend verändert, so dass der Abgleich aller erfassten Strukturen oder Objekte mit der maßstabsgerechten Karte nicht ohne weiteres möglich ist. Auch ist dieser Prozess sehr rechenintensiv, ohne im Vergleich zum Verfahren gemäß Aspekten der Erfindung zu einer höheren Genauigkeit der erzeugten Karte zu führen, so dass diese Vorgehensweise die Kartenentzerrung unnötig verzögern und ggf. sogar verhindern würde, so dass das Verfahren direkt auf einem Flurförderzeug durchgeführt werden könnte, dessen Rechenleistung unter Umständen hierfür nicht ausreicht.

Ferner ist insbesondere vorgesehen, dass die Schritte d) und e) für mehr als zwei in der Umgebungskarte vorhandene Objekte und zugehörige in der maßstabsgerechten Karte vorhandene konstruktiv ortsfeste Merkmale durchgeführt und dementsprechend auch mehr als zwei Korrekturmatrizen erzeugt werden. Liegen mehr als zwei Korrekturmatrizen für unterschiedliche Objekte an unterschiedlichen Orten der Umgebungskarte vor, kann zwischen deren Richtung und Betrag ortsabhängig interpoliert werden. Diese Interpolation findet beispielsweise linear oder auch auf Grundlage einer anderen geeigneten Funktion statt. Aus dieser Interpolation kann eine Vielzahl von Korrekturmatrizen für die Umgebungskarte berechnet werden, beispielsweise in einem Raster einer gewünschten Auflösung. Anschließen kann auf der Grundlage dieser Information die Umgebungskarte entzerrt werden.

Die Erzeugung der Umgebungskarte in Schritt a) erfolgt beispielsweise mit einem Flurförderzeug, welches mit einer geeigneten Scanvorrichtung, beispielsweise einer Laserscanvorrichtung oder einer LI-DAR-Scanvorrichtung, ausgestattet ist.

Die konstruktiv ortsfesten Merkmale sind insbesondere tragende Strukturen eines Gebäudes der Logistikeinrichtung. Beispielsweise handelt es sich um Wände oder Säulen, insbesondere tragende Wände oder Säulen, des Gebäudes, um Tore, Durchfahrten oder um andere Merkmale der Logistikeinrichtung, insbesondere um sicherheitsrelevante Merkmale der Logistikeinrichtung. Die Merkmale sind ferner insbesondere solche, bei denen davon ausgegangen werden kann, dass bei der Bauausführung eines Gebäudes der Logistikeinrichtung eine planungsgemäße und somit mit den Bauplänen übereinstimmende Position und Abmessung eingehalten wird. Die Position und Abmessung eines solchen Merkmals kann also als planungsgemäß und somit als mit der in der maßstabsgerechten Karte verzeichneten Position und Abmessung übereinstimmend angenommen werden.

Die ortsfesten Merkmale sind ferner insbesondere nicht ohne Weiteres ortsveränderbare Merkmale, so wie es beispielsweise für tragende Elemente des Gebäudes der Logistikeinrichtung oder auch für Tordurchfahrten angenommen werden kann. Mit anderen Worten befinden sich die Merkmale an einem festgelegten und bekannten Ort, und es kann ferner davon ausgegangen werden, dass auch im Betrieb der Logistikeinrichtung dieser Ort nicht verändert wird.

Gemäß einer vorteilhaften Ausführungsform ist das Verfahren dadurch fortgebildet, dass in Schritt a) die Umgebungskarte erzeugt wird, indem eine Vielzahl von Einzelscans von in dem Erfassungsbereich vorhandenen Objekten durchgeführt werden und die Einzelscans durch Registrierung zu der Umgebungskarte zusammengefügt werden, wobei die Umgebungskarte insbesondere eine Punktwolke oder ein Belegungsgitter ist.

Bei der Registrierung der Einzelscans, also dem passenden Zusammenfügen der Einzelscans, können zusätzliche Informationen ausgewertet werden. Beispielsweise kann die Radodometrie des zum Scannen eingesetzten Flurförderzeugs ausgewertet werden oder es werden Messwerte einer inertialen Messeinheit (IMU: Inertial Measurement Unit) ausgewertet. Eine IMU weist beispielsweise Beschleunigungssensoren, Gyroskope und/oder Magnetometer auf und liefert so zusätzlich Informationen, welche es erlauben, eine Pose des scannenden Fahrzeugs zu ermitteln. Eine relative Pose des scannenden Fahrzeugs kann auch aus den Einzelscans, jeweils ausgehend von einem Einzelscan relativ zu einem oder mehreren nachfolgenden Scans ermittelt werden. Hierbei werden insbesondere Strukturen eines ersten Scans in einem zweiten Scan identifiziert und so die Relativlage des ersten Scans zum zweiten Scan ermittelt. Die genannten zusätzlichen Informationen können diese Posenermittlung ergänzen oder unterstützen. Das Ergebnis der Registrierung der Einzelscans ist beispielsweise ein Belegungsgitter (Occupancy Grid).

Bei der Registrierung der Einzelscans treten aufgrund von Ungenauigkeiten der Pose des scannenden Fahrzeugs oder der scannenden Vorrichtung, welches/welche in Schritt a) die Umgebungskarte durch Scannen der Umgebung erzeugt, auf. Ungenauigkeiten entstehen beispielsweise durch Fehlerfortpflanzung bei der Registrierung. Es führt also ein kleiner Fehler in der relativen Anordnung bzw. Orientierung eines ersten Einzelscans in einem zweiten Einzelscan dazu, dass auch die relative Anordnung bzw. Orientierung diese und jedes weiteren Scans einen Fehler enthält. Diese fortgepflanzten Fehler können weder bei der Registrierung der Einzelscans noch durch die (hiermit kombinierte) Verwendung von Odometriedaten vermieden werden, da diese Verfahren eine Positionsbestimmung jeweils nur relativ zur vorhergehenden Messung erlauben. Dies führt dazu, dass die aus den Einzelscans zusammengesetzte Umgebungskarte eine Drift oder Verzerrung aufweist, welche, sofern eine solche (nicht korrigierte) Umgebungskarte später zur Grundlage der Positionsbestimmung in der Logistikeinrichtung verwendet würde, zu Ungenauigkeiten in der Positionsbestimmung des Flurförderzeugs und somit in dessen Navigation führen würde.

Indem die gescannte Umgebungskarte anhand der Lage der konstruktiv ortsfesten Merkmale gezielt entzerrt wird, kann eine gescannte Karte mit bisher nicht erreichter Präzision und Positionsgenauigkeit der enthaltenen Objekte erzeugt und bereitgestellt werden. Eine ähnliche Genauigkeit kann bisher nur durch Entzerrung unter Verwendung von eingemessenen Positionsmarken erreicht werden - was jedoch mit erheblichem Aufwand verbunden ist, da die Positionsmarken per Hand eingemessen werden müssen. Vorteilhaft entfällt die Notwendigkeit, Positionsmarken in der Logistikeinrichtung einzumessen im Rahmen des Verfahrens gemäß der genannten Ausführungsformen.

Insbesondere erfolgt die Entzerrung der Umgebungskarte durch entsprechende Korrektur der Posen, also der Positionsinformation und der Richtungsinformation, der in Schritt a) zum Erzeugen der Umgebungskarte eingesetzten Scanvorrichtung, beispielsweise eines Flurförderzeugs.

Die maßstabsgerechte Karte ist insbesondere eine vektorbasierte Karte, beispielsweise eine CAD-Karte. Die maßstabsgerechte Karte kann ebenso ein rasterbasiertes Format haben. Beispielsweise liegt die maßstabsgerechte Karte als PNG-Datei oder in einem anderen rasterbasierten Format vor.

Gemäß einer weiteren vorteilhaften Ausführungsform ist das Verfahren dadurch fortgebildet, dass die Logistikeinrichtung, insbesondere ein Gebäude der Logistikeinrichtung, auf der Grundlage der maßstabsgerechten Karte realisiert wurde. Die maßstabsgerechte Karte ist beispielsweise eine CAD-Karte, insbesondere ein digitaler Bauplan. In einem digitalen Bauplan sind die konstruktiv ortsfesten Merkmale, beispielsweise Tore, Durchfahrten, Wände, Säulen und dergleichen verzeichnet. Es kann davon ausgegangen werden, dass bei entsprechender Bauausführung sich diese Merkmale in der Realität auch tatsächlich an den im digitalen Bauplan verzeichneten Positionen befinden, so dass es einen validen und geeigneten Ansatz darstellt, die Umgebungskarte anhand der Lage dieser Merkmale zu korrigieren.

Gemäß einer weiteren Ausführungsform ist das Verfahren fortgebildet, indem in der Umgebungskarte eine erste Klasse von Objekten vorhanden ist, die konstruktiv ortsfesten Merkmalen zuweisbar sind oder zugewiesen werden, und eine zweite Klasse von Objekten vorhanden ist, die nicht konstruktiv ortsfesten Merkmalen zuweisbar sind oder zugewiesen werden, wobei die korrigierte Umgebungskarte, die als Lokalisierungskarte für die Positionsbestimmung des Flurförderzeugs in Schritt h) ausgegeben wird, sowohl Objekte der ersten als auch der zweiten Klasse umfasst.

Eine entzerrte gescannte Umgebungskarte bietet als Lokalisierungskarte im Vergleich zu einer maßstabsgerechten Karte einen größeren Detailreichtum. Das Flurförderzeug kann auf der Grundlage einer solchen Lokalisierungskarte seine Position in der Logistikeinrichtung auf einer breiteren Datengrundlage errechnen und somit schneller und präziser bestimmen.

Gemäß einer weiteren vorteilhaften Ausführungsform ist ferner vorgesehen, dass in Schritt d) ein von einem Benutzer erzeugter Korrekturbefehl erfasst wird.

Der Korrekturbefehl wird beispielsweise erzeugt, indem ein geeignetes Benutzerendgerät oder Benutzeranzeigegerät ausgelesen, abgefragt oder ein entsprechender Befehl empfangen wird. Das Benutzerendgerät ist beispielsweise ein Touchpad, auf dem eine Position markiert werden kann, oder eine Computermaus, mit deren Mauszeiger eine Position ausgewählt wird. Ein Benutzer kann beispielsweise in der gescannten Umgebungskarte ein Objekt identifizieren und dessen exakte Position in der maßstabsgerechten Karte anzeigen oder markierten. Beispielsweise kann eine Kante einer Säule oder eine Kante einer Durchfahrt oder eines Tores in der gescannten Umgebungskarte durch den Benutzer identifiziert und dessen Lage in der maßstabsgerechten Karte durch den Korrekturbefehl zugeordnet werden. Aus der Differenz der Lage dieser beiden Objekte ergibt sich die Korrekturmatrix, auf deren Grundlage anschließend die Entzerrung der gescannten Umgebungskarte vorgenommen werden kann.

Gemäß einer weiteren Ausführungsform ist das Verfahren dadurch fortgebildet, dass der in Schritt d) erfasste Korrekturbefehl einen Suchbereich in der in Schritt c) angezeigten Umgebungskarte und/oder der maßstabsgerechten Karte festlegt, wobei in dem Suchbereich das in der Umgebungskarte vorhandene Objekt und das in der maßstabsgerechten Karte vorhandene konstruktiv ortsfeste Merkmal vorhanden sind, wobei die Zuordnung zwischen dem in der Umgebungskarte vorhandenen Objekt zu dem in der maßstabsgerechten Karte vorhandenen konstruktiv ortsfesten Merkmal durch einen Objekterkennungsalgorithmus durchgeführt wird oder von einem Benutzer durch einen Objekterkennungsalgorithmus assistiert durchgeführt wird.

Benutzerseitig kann beispielsweise ein Suchfenster in der überlagerten Karte festgelegt werden, wobei der Objekterkennungsalgorithmus in diesem Suchfenster ähnliche oder einander entsprechende Strukturen, beispielsweise den Umriss oder Teilumriss einer Säule, eines Tors oder dergleichen, identifiziert. Auf der Grundlage dieser von dem Objektserkennungsalgorithmus vorgeschlagenen Zuordnung kann anschließend die Korrekturmatrix berechnet werden, wobei durch einen ferner insbesondere vorgesehenen geeigneten Korrekturalgorithmus auch die Korrekturmatrix einem Benutzer vorgeschlagen werden kann. Benutzerseitig ist gemäß einer solchen Ausführungsform lediglich noch eine Bestätigung der Zuordnung erforderlich.

Gemäß einem solchen Verfahren kann die Entzerrung der Umgebungskarte schnell und effizient vorgenommen werden.

Gemäß einer vorteilhaften Weiterbildung des Verfahrens ist ferner vorgesehen, dass Schritt d) während der Durchführung von Schritt a) erfolgt.

Mit anderen Worten wird also die Entzerrung und Korrektur der Umgebungskarte vorgenommen, während diese durch die entsprechenden Umgebungsscans erzeugt wird. Eine solche Echtzeitverarbeitung ist insbesondere in Kombination mit dem zuvor erwähnten Objekterkennungsalgorithmus und den damit verbundenen Merkmalen vorteilhaft. So kann beispielsweise während einer Scanfahrt einem Benutzer eine entsprechend Zuordnung vorgeschlagen werden, welche von diesem direkt, also quasi in Echtzeit, bestätigt werden kann. Die Erfassung und Korrektur der Umgebungskarte kann schnell und effizient vorgenommen werden.

Die Entzerrung der Umgebungskarte erfolgt beispielsweise durch entsprechende Korrektur der Posen des Flurförderzeugs während des Scanvorgangs. Weitere Entzerrungsverfahren, wie beispielsweise ein auf lineare Interpolation beruhendes Entzerrungsverfahren, oder ein Entzerrungsverfahren, bei dem andere geeignete Funktionen zur Interpolation zwischen den Verschiebevektoren verwendet werden, können ebenfalls zum Einsatz kommen.

Die Aufgabe wird ferner gelöst durch ein Verfahren zum Aktualisieren der Lokalisierungskarte, bei dem zunächst gemäß einem Verfahren nach einem oder mehreren der zuvor genannten Ausführungsformen eine Lokalisierungskarte erzeugt wird. Zum Aktualisieren dieser Lokalisierungskarte werden die folgenden Schritte durchgeführt:
a1) Erzeugen einer aktualisierten Umgebungskarte des Erfassungsbereichs der Logistikeinrichtung durch Scannen der in dem Erfassungsbereich vorhandenen Objekte und von weiteren bei der Erzeugung der Umgebungskarte nicht oder an anderer Position erfassten Objekten,
b1) Verwenden der in Schritt b) erfassten maßstabsgerechten Karte,
c1) Anzeigen einer erzeugten aktualisierten Umgebungskarte und der maßstabsgerechten Karte auf der Anzeigevorrichtung,
d1) Verwenden der in Schritt d) erfassten Zuordnung zwischen dem in der Umgebungskarte vorhandenen Objekt und dem in der maßstabsgerechten Karte vorhandenen konstruktiv ortsfesten Merkmal,
e1) Erzeugen einer aktualisierten Korrekturmatrix, insbesondere für in der Umgebungskarte an verzerrter Position dargestellte Objekte, wobei durch Anwendung der aktualisierten Korrekturmatrix auf eine aktualisierte gescannte Position des in der Umgebungskarte vorhandenen Objekts, welches dem konstruktiv ortsfesten Merkmal in Schritt d1) zugeordnet wurde, diese aktualisierte gescannte Position in die maßstabsgerechte Position des konstruktiv ortsfesten Merkmals, wie sie in der maßstabsgerechten Karte enthalten ist, überführbar ist,
f1) Durchführen der Schritte d1) und e1) zumindest für ein in der Umgebungskarte vorhandenes erstes Objekt und für ein in der Umgebungskarte vorhandenes zweites Objekt,
g1) Entzerren der Umgebungskarte anhand zumindest einer für das erste Objekt erzeugten aktualisierten ersten Korrekturmatrix und einer für das zweite Objekt erzeugten aktualisierten zweiten Korrekturmatrix,
h1) Ausgeben der in Schritt g1) entzerrten Umgebungskarte als aktualisierte Lokalisierungskarte für die Positionsbestimmung des Flurförderzeugs in der Logistikeinrichtung.

Vorteilhaft können die bei der Erzeugung der Lokalisierungskarte hergestellten Verknüpfungen zwischen in der Umgebungskarte vorhandenen Objekten und den ortsfesten Merkmalen in der maßstabsgerechten Karte auch für die Aktualisierung der Karte verwendet werden. Dies beschleunigt die Aktualisierung der Lokalisierungskarte und verringert den hierfür erforderlichen Aufwand.

Die Aufgabe wird ferner gelöst durch eine Vorrichtung zum Erzeugen einer Lokalisierungskarte für die Positionsbestimmung eines Flurförderzeugs in einer Logistikeinrichtung, aufweisend:
a) eine Scanvorrichtung zum Erzeugen einer Umgebungskarte eines Erfassungsbereichs der Logistikeinrichtung, wobei die Scanvorrichtung eingerichtet ist, in dem Erfassungsbereich vorhandene Objekte zu scannen,
wobei diese Vorrichtung fortgebildet ist durch:
b) eine Erfassungsvorrichtung, die eingerichtet ist, eine maßstabsgerechte Karte zumindest des Erfassungsbereichs zu erfassen, wobei in der maßstabsgerechten Karte konstruktiv ortsfeste Merkmale vorhanden sind,
c) eine Anzeigevorrichtung, die eingerichtet ist, die erzeugte Umgebungskarte und die maßstabsgerechte Karte anzuzeigen,
d) eine Korrekturbefehlerfassungsvorrichtung, die eingerichtet ist, einen Korrekturbefehl betreffend eine Zuordnung zwischen einem in der Umgebungskarte vorhandenen Objekt und einem in der maßstabsgerechten Karte vorhandenen konstruktiv ortsfesten Merkmal zu erfassen,
e) eine Korrekturmatrixerzeugungsvorrichtung, die eingerichtet ist, eine Korrekturmatrix zu erzeugen, insbesondere für in der Umgebungskarte an verzerrter Position dargestellte Objekte, wobei durch Anwendung der Korrekturmatrix auf die gescannte Position des in der Umgebungskarte vorhandenen Objekts, welches von der Korrekturbefehlerfassungsvorrichtung dem konstruktiv ortsfesten Merkmal zuweisbar ist oder zugewiesen wurde, diese gescannte Position in eine maßstabsgerechte Position des konstruktiv ortsfesten Merkmals, wie sie in der maßstabsgerechten Karte enthalten ist, überführbar ist,
f) wobei die Korrekturbefehlerfassungsvorrichtung und die Korrekturmatrixerzeugungsvorrichtung dazu eingerichtet sind, die Zuordnung und die Korrekturmatrixerzeugung zumindest für ein in der Umgebungskarte vorhandenes erstes Objekt und für ein in der Umgebungskarte vorhandenes zweites Objekt durchzuführen,
g) eine Entzerrungsvorrichtung, die eingerichtet ist, die Umgebungskarte anhand einer für das erste Objekt erzeugten ersten Korrekturmatrix und einer für das zweite Objekt erzeugten zweiten Korrekturmatrix zu entzerren,
h) eine Ausgabevorrichtung, die dazu eingerichtet ist, die von der Entzerrungsvorrichtung entzerrte Umgebungskarte als Lokalisierungskarte für die Positionsbestimmung des Flurförderzeugs in der Logistikeinrichtung auszugeben.

Auf die Vorrichtung treffen gleiche oder ähnliche Vorteile zu, wie sie bereits im Hinblick auf das Verfahren zum Erzeugen der Lokalisierungskarte erwähnt wurden, so dass auf Wiederholungen verzichtet werden soll.

Die Vorrichtung ist insbesondere dadurch fortgebildet, dass die Scanvorrichtung dazu eingerichtet ist, die Umgebungskarte zu erzeugen, indem eine Vielzahl von Einzelscans von in dem Erfassungsbereich vorhandenen Objekten durchgeführt werden und die Einzelscans durch Registrierung zu der Umgebungskarte zusammengefügt werden, wobei die Umgebungskarte insbesondere eine Punktwolke oder ein Belegungsgitter ist.

Gemäß einer weiteren Ausführungsform ist die Logistikeinrichtung auf der Grundlage der maßstabsgerechten Karte realisiert worden.

Die Vorrichtung ist ferner bevorzugt dadurch fortgebildet, dass in der Umgebungskarte eine erste Klasse von Objekten vorhanden ist, die konstruktiv ortsfesten Merkmalen zuweisbar sind oder zugewiesen werden, und eine zweite Klasse von Objekten vorhanden ist, die nicht konstruktiv ortsfesten Merkmalen zuweisbar sind oder zugewiesen werden, wobei die korrigierte Umgebungskarte, die als Lokalisierungskarte für die Positionsbestimmung des Flurförderzeugs von der Ausgabevorrichtung ausgebbar ist oder ausgegeben wird, sowohl Objekte der ersten als auch der zweiten Klasse umfasst.

Die Vorrichtung ist ferner insbesondere dazu eingerichtet, dass die Korrekturbefehlerfassungsvorrichtung dazu eingerichtet ist, einen von einem Benutzer erzeugten Korrekturbefehl zu erfassen.

Ferner ist insbesondere vorgesehen, dass die Korrekturbefehlerfassungsvorrichtung dazu eingerichtet ist, einen Korrekturbefehl zu erfassen, der einen Suchbereich in der von der Anzeigevorrichtung anzeigbaren oder angezeigten Umgebungskarte und/oder maßstabsgerechten Karte festlegt, wobei in dem Suchbereich das in der Umgebungskarte vorhandene Objekt und das in der maßstabsgerechten Karte vorhandene konstruktiv ortsfeste Merkmal vorhanden sind, wobei die Korrekturbefehlerfassungsvorrichtung ferner dazu eingerichtet ist, die Zuordnung zwischen dem in der Umgebungskarte vorhandenen Objekt zu dem in der maßstabsgerechten Karte vorhandenen konstruktiv ortsfesten Merkmal durch einen Objekterkennungsalgorithmus durchzuführen oder einem Benutzer durch einen Objekterkennungsalgorithmus zu assistieren.

Ferner ist die Vorrichtung insbesondere dadurch fortgebildet, dass die Korrekturbefehlerfassungsvorrichtung dazu eingerichtet ist, den Korrekturbefehl zu erfassen, während die Scanvorrichtung die Umgebungskarte des Erfassungsbereichs der Logistikeinrichtung erfasst.

Ferner wird die Aufgabe gelöst durch eine Vorrichtung zum Aktualisieren einer Lokalisierungskarte, welche eine Vorrichtung gemäß einem oder mehreren der zuvor genannten Ausführungsformen umfasst, mit der eine Lokalisierungskarte erzeugbar ist oder erzeugt wird. Diese Vorrichtung ist fortgebildet dadurch, dass
a1) die Scanvorrichtung dazu eingerichtet ist, eine aktualisierte Umgebungskarte des Erfassungsbereichs der Logistikeinrichtung durch Scannen der in dem Erfassungsbereich vorhandenen Objekte und von weiteren bei der Erzeugung der Umgebungskarte nicht oder an anderer Position erfassten Objekten zu erzeugen,
b1) die Erfassungsvorrichtung dazu eingerichtet ist, die erfasste maßstabsgerechte Karte zu verwenden,
c1) die Anzeigevorrichtung dazu eingerichtet ist, eine von der Scanvorrichtung erzeugte aktualisierte Umgebungskarte und die maßstabsgerechte Karte anzuzeigen,
d1) die Korrekturbefehlerfassungsvorrichtung dazu eingerichtet ist, die erfasste Zuordnung zwischen dem in der Umgebungskarte vorhandenen Objekt und dem in der maßstabsgerechten Karte vorhandenen konstruktiv ortsfesten Merkmal zu verwenden,
e1) die Korrekturmatrixerzeugungsvorrichtung dazu eingerichtet ist, eine aktualisierte Korrekturmatrix zu erzeugen, insbesondere für in der Umgebungskarte an verzerrter Position dargestellte Objekte, wobei durch Anwendung der aktualisierten Korrekturmatrix auf eine aktualisierte gescannte Position des in der Umgebungskarte vorhandenen Objekts, welches dem konstruktiv ortsfesten Merkmal von der Korrekturbefehlerfassungsvorrichtung zugeordnet wurde, diese aktualisierte gescannte Position in die maßstabsgerechte Position des konstruktiv ortsfesten Merkmals, wie sie in der maßstabsgerechten Karte enthalten ist, überführbar ist,
f1) die Korrekturbefehlerfassungsvorrichtung und die Korrekturmatrixerzeugungsvorrichtung dazu eingerichtet sind, die Zuordnung und die Korrekturmatrixerzeugung zumindest für ein in der Umgebungskarte vorhandenes erstes Objekt und für ein in der Umgebungskarte vorhandenes zweites Objekt durchzuführen,
g1) die Entzerrungsvorrichtung dazu eingerichtet ist, die Umgebungskarte anhand zumindest einer für das erste Objekt erzeugten aktualisierten ersten Korrekturmatrix und einer für das zweite Objekt erzeugten aktualisierten zweiten Korrekturmatrix zu entzerren,
h1) die Ausgabevorrichtung dazu eingerichtet ist, die entzerrte Umgebungskarte als aktualisierte Lokalisierungskarte für die Positionsbestimmung des Flurförderzeugs in der Logistikeinrichtung auszugeben.

Gemäß weiterer Ausführungsformen ist ein Verfahren zur Positionsbestimmung und/oder zum Navigieren eines Flurförderzeugs in einer Logistikvorrichtung vorgesehen, wobei dieses Flurförderzeug eine Positionsbestimmung auf der Grundlage einer Lokalisierungskarte vornimmt, die gemäß einem Verfahren zum Erzeugen einer Lokalisierungskarte gemäß Aspekten der Erfindung erzeugt wurde.

Es ist ferner gemäß einer weiteren Ausführungsform ein Flurförderzeug vorgesehen, welches eine Vorrichtung zum Erzeugen einer Lokalisierungskarte gemäß einer oder mehrerer der zuvor genannten Ausführungsformen umfasst. Gemäß weiteren Aspekten der Erfindung ist ein Logistiksystem vorgesehen, welches ein solches Flurförderzeug sowie eine Vorrichtung zum Erzeugen einer Lokalisierungskarte umfasst.

Weitere Merkmale der Erfindung werden aus der Beschreibung erfindungsgemäßer Ausführungsformen zusammen mit den Ansprüchen und den beigefügten Zeichnungen ersichtlich.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein Ablaufdiagramm eines Verfahrens zum Erzeugen einer Lokalisierungskarte,
- Fig. 2: eine gescannte Umgebungskarte eines Erfassungsbereichs einer Logistikeinrichtung,
- Fig. 3: eine maßstabsgerechte Karte, welche einen Teil des Erfassungsbereichs der Logistikeinrichtung darstellt,
- Fig. 4 und 5: ein weiteres Ablaufdiagramm eines modifizierten Verfahrens zum Erzeugen einer Lokalisierungskarte,
- Fig. 6 a) bis e): jeweils eine schematische Darstellung einer Umgebung, in der beispielhaft zwei gescannte Objekte und diesen zugeordnete konstruktiv ortsfeste Merkmale der Logistikeinrichtung sowie Orte, an denen Einzelscans erfasst wurden, dargestellt sind, wobei die Figuren einzelne Schritte des Verfahrens zum Erzeugen der Lokalisierungskarte, von der Erfassung der Umgebungskarte bis zur Entzerrung derselben, illustrieren,
- Fig. 7: ein Flurförderzeug mit einer Scanvorrichtung und eine Vorrichtung zum Erzeugen einer Lokalisie-rungskarte.

In den Zeichnungen sind jeweils gleiche oder gleichartige Elemente und/oder Teile mit denselben Bezugsziffern versehen, so dass von einer erneuten Vorstellung jeweils abgesehen wird.

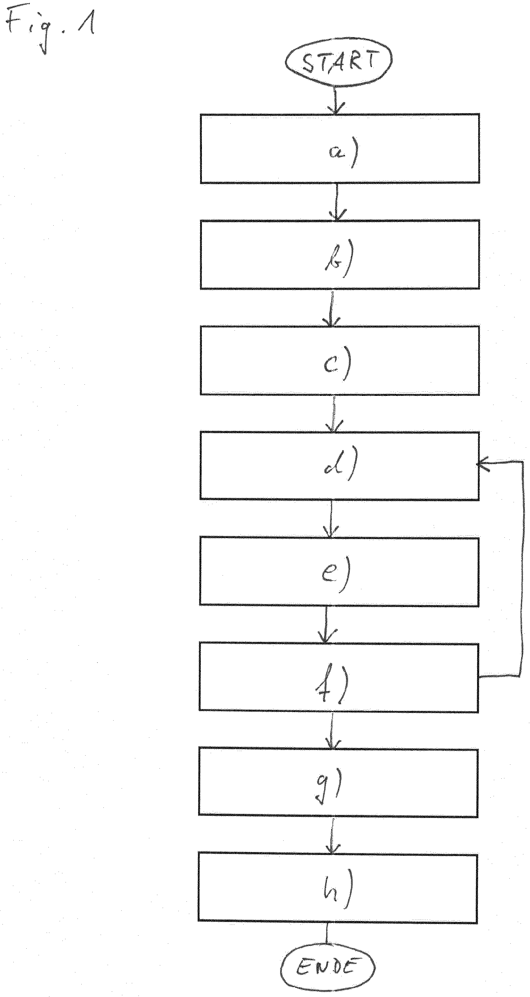

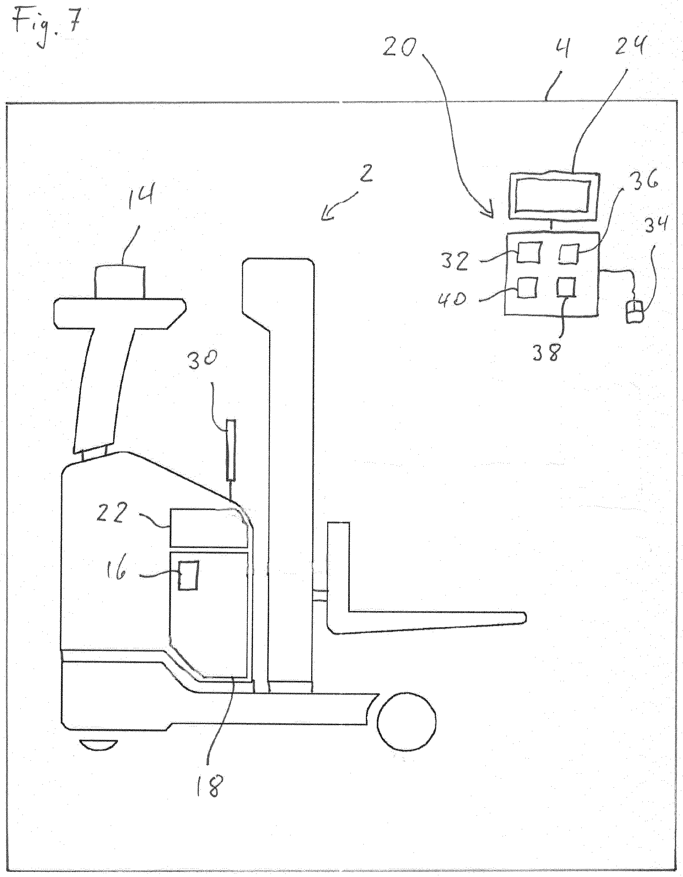

Fig. 1 zeigt ein Ablaufdiagramm eines Verfahrens zum Erzeugen einer Lokalisierungskarte. Die Lokalisierungskarte dient als Grundlage für die Positionsbestimmung eines Flurförderzeugs 2 in einer Logistikeinrichtung 4 (vgl. Fig. 7). Das Verfahren zum Erzeugen der Lokalisierungskarte startet in Schritt a) mit der Erzeugung einer Umgebungskarte eines Erfassungsbereichs der Logistikeinrichtung. Die Umgebungskarte wird durch Scannen von in dem Erfassungsbereich vorhandenen Objekten erzeugt. Die Umgebungskarte wird insbesondere erzeugt, indem eine Vielzahl von Einzelscans von in einem Erfassungsbereich vorhandenen Objekten zusammengefügt werden. Die Einzelscans werden beispielsweise durch Registrierung zu der Umgebungskarte zusammengefügt. Hierbei werden die verschiedenen Einzelscans jeweils anhand ihrer erfassten Features zu zuvor aufgenommen Einzelscans ausgerichtet. Hierbei können Odometriedaten und/oder IMU-Daten des Flurförderzeugs 2 zur Erhöhung der Genauigkeit herangezogen werden. Auch kann der Ort der jeweiligen Messung, also der Ort der Erfassung des Einzelscans, in der Umgebungskarte verzeichnet sein und so die Bewegungsbahn des Fahrzeugs nachvollzogen werden. Die Umgebungskarte liegt anschließend beispielsweise als Punktwolke oder in Form eines Belegungsgitters vor.

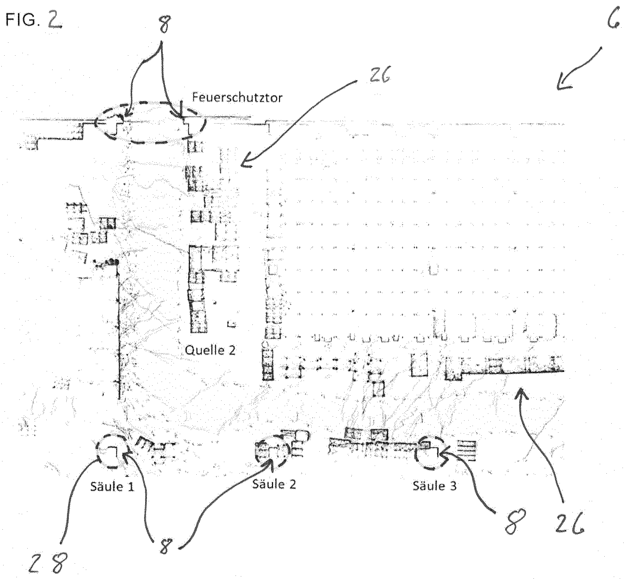

Fig. 2 zeigt eine beispielhafte Umgebungskarte 6 eines Erfassungsbereichs der Logistikeinrichtung 4. Der Erfassungsbereich ist insbesondere ein Teilbereich der Logistikeinrichtung 4. Beispielhaft sind verschiedene Objekte 8, 26 dargestellt, bei denen es sich beispielsweise um Paletten, Palettenplätze oder Regaleinrichtungen handelt, wie im Fall der mit 26 bezeichneten Objekte oder beispielsweise um die Säulen 1 bis 3 sowie ein Feuerschutztor, wie im Fall der mit 8 bezeichneten Objekte. Auf die Unterscheidung der mit unterschiedlichen Bezugsziffern versehenen Objekte wird weiter unten im Text detaillierter eingegangen.

In Abhängigkeit von der Trajektorie des Fahrzeugs, welches die einzelnen Scans aufnimmt, die der Umgebungskarte 6 zugrunde liegen, sind einzelne Objekte 8, nur teilweise sichtbar. Beispielhaft ist dies für die Säulen 1 bis 3 zu erkennen, von denen jeweils nur die in den jeweiligen Einzelscans sichtbaren Flächen in der Umgebungskarte 6 dargestellt sind. Die weiteren Flächen sind entweder der Scanrichtung abgewandt oder sie wurden durch weitere Objekte, die sich ebenfalls im Erfassungsbereich befinden, verdeckt oder abgeschattet.

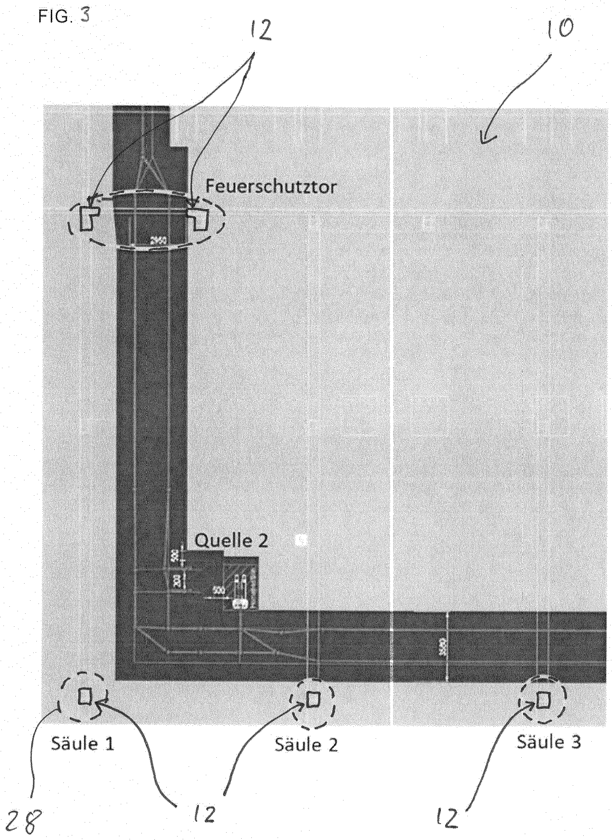

In Schritt b) des in Fig. 1 dargestellten Verfahrens zum Erzeugen der Lokalisierungskarte wird eine maßstabsgerechte Karte 10 erfasst. Fig. 3 zeigt eine beispielhafte maßstabsgerechte Karte 10.

Die maßstabsgerechte Karte 10 zeigt einen Teilbereich des Erfassungsbereichs oder zumindest den Erfassungsbereich, d.h. die maßstabsgerechte Karte 10 kann einen größeren Bereich der Logistikeinrichtung 4 zeigen als die Umgebungskarte 6, welche in Schritt a) erfasst wurde. In der maßstabsgerechten Karte 10 sind konstruktiv ortsfeste Merkmale 12 vorhanden. Dies sind beispielhaft die auch in der Figur als solche bezeichneten Säulen 1 bis 3 sowie das Feuerschutztor.

Die Erzeugung der Umgebungskarte 6 in Schritt a) erfolgt mit einer Scanvorrichtung 14, wie sie beispielsweise auf dem in Fig. 7 gezeigten Flurförderzeug 2 angebracht sein kann. Die Scanvorrichtung 14 kann ebenso, abweichend von der schematischen Darstellung, knapp über dem Boden, also im unteren Teil des Flurförderzeugs 2 angeordnet sein. Ferner kann die Scanvorrichtung 14 mehrere einzelnen Scanner umfassen, wobei diese sowohl in Bodennähe als auch an anderen Stellen des Flurförderzeugs 2 angebracht sein können. Die Scandaten der einzelnen Scanner können durch geeignete Transformationen auf einen gemeinsamen Referenzpunkt bezogen oder zurück gerechnet werden, beispielsweise auf einen Fahrzeugdrehpunkt. Die Umgebungskarte 6 kann aus Einzelscans zusammengesetzt sein. Nach der Erfassung der Umgebungskarte 6, insbesondere nach der Erfassung der Einzelscans, die beispielsweise in einem hierfür geeigneten Speichermedium 16 des Flurförderzeugs 2 abgelegt werden, können die Einzelscans an eine externe Verarbeitungseinheit 20 übertragen werden. Zu diesem Zweck umfasst das Flurförderzeug 2 eine Kommunikationseinheit 22, welche dazu eingerichtet ist, eine drahtgebundene oder drahtlose Datenverbindung zwischen dem Flurförderzeug 2 und der externen Verarbeitungseinheit 20 zu betreiben.

Die externe Verarbeitungseinheit 20 umfasst eine Anzeigevorrichtung 24, auf welcher gemäß Schritt c) des in Fig. 1 dargestellten Verfahrens, eine überlagerte Karte angezeigt wird. Die überlagerte Karte umfasst die in Schritt a) erzeugte Umgebungskarte 6 in Überlagerung mit der in Schritt b) erfassten maßstabsgerechten Karte 10. In der dargestellten Überlagerung können Abweichungen zwischen den in der gescannten Umgebungskarte 6 vorhandenen Objekten 8 und den in der maßstabsgerechten Karte 10 umfassten ortsfesten Merkmalen 12 dargestellt und erkannt werden.

Zur Entzerrung der Umgebungskarte 6 wird in Schritt d) des in Fig. 1 gezeigten Verfahrens ein Korrekturbefehl erfasst. Dieser Korrekturbefehl betrifft eine Zuordnung zwischen einem in der Umgebungskarte 6 vorhandenen Objekt 8 und einem in der maßstabsgerechten Karte 10 vorhandenen konstruktiv ortsfesten Merkmal 12. Beispielsweise betrifft der Korrekturbefehl eine Zuordnung zwischen einer der in der Umgebungskarte 6 sichtbaren Säulen 1 bis 3 zu einer entsprechenden Säule, wie sie in der maßstabsgerechten Karte 10 dargestellt ist. Gleiches gilt für das Feuerschutztor.

Da die Umgebungskarte 6 aus einer Vielzahl von Einzelscans durch Registrierung zusammengefügt wird, und bei diesem Vorgang unweigerlich Fehler auftreten, beispielsweise aufgrund von Ungenauigkeiten der Bestimmung der Pose des den Einzelscan erfassenden Flurförderzeugs 2, weist die Umgebungskarte 6 eine Drift und/oder Ungenauigkeiten auf. Die Position des Objekts 8, beispielsweise der Säule 1 in der Umgebungskarte 6, wird von der Position des Merkmals 12, bei dem es sich ebenfalls um die Säule 1 handelt, dargestellt in der maßstabsgerechten Karte 10, abweichen.

In Schritt e) wird daher eine Korrekturmatrix zwischen der gescannten Position des in der Umgebungskarte 6 vorhandenen Objekts 8 und dem zuvor diesem zugeordnet konstruktiv ortsfesten Merkmal 12 erzeugt. Diese Korrekturmatrix wäre beispielsweise der Verschiebevektor zwischen der Säule 1, wie sie in der Umgebungskarte 6 sichtbar ist, und der Säule 1, wie sie als Merkmal 12 in der maßstabsgerechten Karte 10 gezeigt ist. Ferner kann die Korrekturmatrix eine Drehung definieren oder auch eine Kombination aus einer Verschiebung und einer Drehung.

Die auf diese Weise erzeugte Korrekturmatrix weist auf die Abweichungen der durch Scannen erfassten Umgebungskarte 6 von den realen Gegebenheiten der Logistikeinrichtung 4 hin, wie sie in der maßstabsgerechten Karte 10 wiedergegeben sind. Bei den konstruktiv ortsfesten Merkmalen 12, die die maßstabsgerechte Karte 10 zeigt, handelt es sich um solche baulichen Elemente, die auch im Betrieb der Logistikeinrichtung 4 nicht der örtlichen Veränderung unterliegen. Wird eine ordnungsgemäße Bauausführung vorausgesetzt, kann davon ausgegangen werden, dass sich diese Merkmale 12 auch tatsächlich an denjenigen Positionen befinden, die als Positionen in der maßstabsgerechten Karte 10 hinterlegt sind.

Als weiterer Schritt f) wird gemäß dem in Fig. 1 als Ablaufdiagramm dargestellten Verfahren der Schritt d), nämlich die Erfassung des Korrekturbefehls betreffend die Zuordnung zwischen dem in der Umgebungskarte 6 vorhandenen Objekt 8 und dem in der maßstabsgerechten Karte 10 vorhandenen konstruktiv ortsfesten Merkmal 12 und die anschließende Erzeugung der Korrekturmatrix zwischen den Positionen dieser beiden Elemente für zumindest ein erstes und ein zweites Objekt wiederholt. Dies ist mit dem Rückpfeil auf Schritt d) in Fig.1 angedeutet. Es wird also beispielsweise für die Säule 1 zunächst eine Zuordnung zwischen dem Objekt 8 (Säule 1 in der Umgebungskarte 6) und dem Merkmal 12 (Säule 1 in der maßstabsgerechten Karte 10) getroffen und anschließend wird die Korrekturmatrix zwischen diesen beiden Elementen bestimmt. Anschließend wird dieser Schritt beispielsweise für die Säule 2 wiederholt. Selbstverständlich kann dieser Schritt auch für weitere Objekte 8 und deren zugehörige Merkmale 12 wiederholt werden, beispielsweise für die Säule 3 und/oder das Feuerschutztor.

Anschließend wird die Umgebungskarte 6 in Schritt g) des in Fig. 1 als Ablaufdiagramm dargestellten Verfahrens entzerrt. Diese Entzerrung wird auf der Grundlage eines für das erste Objekt, beispielsweise für die Säule 1, und eines für das zweite Objekt, beispielsweise für die Säule 2 und/oder das Feuerschutztor, erzeugten Korrekturmatrix durchgeführt. Die Entzerrung der Karte erfolgt beispielsweise durch lineares Strecken der Karte, wobei zwischen den Korrekturmatrizen für einzelne Objekte 8 und die Merkmale 12 interpoliert werden kann. Eine Korrektur kann ebenfalls auf der Grundlage einer Korrektur der Pose des den Scanvorgang in Schritt a) durchführenden Fahrzeugs, beispielsweise des Flurförderzeugs 2, durchgeführt werden.

Dieses Entzerren ist notwendig, da die Umgebungskarte 6 und die maßstabsgerechte Karte nicht nur relativ zueinander ausgerichtet, also platziert und gedreht, sondern die Umgebungskarte 6 auch in ihrer relativen Dimension verändert werden muss. Dies liegt wie bereits weiter oben erwähnt daran, dass die relative Anordnung der Einzelscans zueinander Ungenauigkeiten unterliegt, die beispielsweise einen Winkelfehler erzeugen, der dazu führt, dass beispielsweise zwei senkrecht zueinander verlaufende Gänge in der Logistikeinrichtung 4, wie in den Fig. 2 und 3 gezeigt, in der Umgebungskarte 6 einen etwas größeren oder kleineren Winkel als 90° zueinander aufweisen. Um dies zu korrigieren reicht es nicht aus, die beiden Karten relativ zueinander in die korrekte Position zu schieben, sondern es muss zumindest die Position und ggf. Orientierung eines ersten ortsfesten Elementes in der Umgebungskarte 6 (beispielsweise die Position des Feuerschutztores) relativ zu einem zweiten ortsfesten Element (beispielsweise der Säule 1) entsprechend der wahren und maßstabsgerechten relativen Position und ggf. Orientierung wie in der maßstabsgerechten Karte angegeben, korrigiert also entzerrt werden.

Die entzerrte Umgebungskarte 6 wird in Schritt h) als Lokalisierungskarte für die Positionsbestimmung des Flurförderzeugs 2 in der Logistikeinrichtung 4 ausgegeben.

Zu diesem Zweck wird beispielsweise die entzerrte Umgebungskarte 6 von der externen Verarbeitungseinheit 20 an das Flurförderzeug 2 übertragen, beispielsweise über die Kommunikationseinheit 22 des Flurförderzeugs 2. Die Lokalisierungskarte kann anschließend beispielsweise in dem Speichermedium 16 des Flurförderzeugs 2 abgelegt werden. Die Verarbeitungseinheit 18 des Flurförderzeugs 2 kann anschließend die Positionsbestimmung des Flurförderzeugs 2 in der Logistikeinrichtung 4 auf dieser Datengrundlage vornehmen. Die Positionserfassung kann in diesem Zusammenhang wiederum auf der Grundlage von Daten erfolgen, die die Scanvorrichtung 14 von der Umgebung des Flurförderzeugs 2 in der Logistikeinrichtung 4 erfasst. Zur Positionsbestimmung wird beispielsweise ein Vergleich mit der in dem Speichermedium 16 hinterlegten Lokalisierungskarte vorgenommen.

Die Logistikeinrichtung 4 wurde, insbesondere auf der Grundlage der maßstabsgerechten Karte 10, wie sie Fig. 3 zeigt, realisiert. Es handelt sich also bei der maßstabsgerechten Karte beispielsweise um einen in digitaler Form vorliegenden Bauplan. Insbesondere wurde ein Gebäude, welches die Logistikeinrichtung 4 umfasst oder in welcher die Logistikeinrichtung 4 eingerichtet ist, auf der Grundlage der maßstabsgerechten Karte 10 realisiert.

Die beispielhaft in Fig. 2 gezeigte Umgebungskarte 6 umfasst zwei Klassen von Objekten. Eine erste Klasse von Objekten ist mit Bezugsziffer 8 bezeichnet, eine zweite Klasse von Objekten mit Bezugsziffer 26. Die Objekte 8 der ersten Klasse sind konstruktiv ortsfesten Merkmalen 12 in der maßstabsgerechten Karte 10 zuweisbar oder können diesen zugeordnet werden. Die Objekte 26 der zweiten Klasse sind nicht konstruktiv ortsfesten Merkmalen 12 zuweisbar, können also keinen in der maßstabsgerechten Karte 10 dargestellten konstruktiv ortsfesten Merkmalen 12 zugeordnet werden. Die Umgebungskarte 6 umfasst dennoch die Objekte 26 der zweiten Klasse. Auch ihre Lage wird in dem Entzerrungsschritt g) korrigiert. Die Objekte 26 der zweiten Klasse reichern die Datengrundlage der Umgebungskarte 6 im Vergleich zu der maßstabsgerechten Karte 10 an, sodass für die Positionsbestimmung des Flurförderzeugs 2 in der Logistikeinrichtung 4 eine breitere Datengrundlage geschaffen wird.

Der zuvor im Zusammenhang mit Schritt d) erwähnte Korrekturbefehl ist beispielsweise ein benutzererzeugter Korrekturbefehl. Beispielsweise kann ein Benutzer in der überlagerten Karte, wie sie auf der Anzeigevorrichtung 24 angezeigt wird, zunächst die Lage der Säule 1 (oder die Lage einer Kante der Säule 1) in der Umgebungskarte 6 markieren. Anschließend markiert der Benutzer das zugehörige ortsfeste Merkmal 12, welches die Säule 1 darstellt, in der maßstabsgerechten Karte 10. Auch hier kann anstatt der Säule 1 als Ganzes eine Kante dieser Säule markiert werden, was die Genauigkeit der Zuweisung erhöhen kann. Aus diesen beiden Benutzereingaben lässt sich ddie in Schritt e) erzeugte Korrekturmatrix ableiten.

Verfährt der Benutzer auf diese Weise beispielsweise auch mit den Säulen 2 und 3 oder auch mit den Bauelementen des Feuerschutztors, so lässt sich die Umgebungskarte 6, wie sie Fig. 2 zeigt, anhand dieser Informationen entzerren, und es kann eine hochqualitative Umgebungskarte 6 als Lokalisierungskarte für das Flurförderzeug 2 bereitgestellt werden.

Der Benutzer kann bei diesem Prozess eine Assistenzfunktion nutzen, indem er einen Suchbereich 28, wie er beispielhaft für die Säule 1 mit Bezugszeichen versehen und für die Objekte 8 der ersten Klasse sowie für die zugehörigen Merkmale 12 in der Umgebungskarte 6 und der maßstabsgerechten Karte 10 in den Fig. 2 und 3 dargestellt ist, nutzen. Diesen Suchbereich 28 legt der Benutzer beispielsweise in der auf der Anzeigevorrichtung 24 dargestellten überlagerten Karte fest. In dem Suchbereich 28 befindet sich in der Umgebungskarte 6 das Objekt 8 und in der maßstabsgerechten Karte 10 das Merkmal 12. Ein von der externen Verarbeitungseinheit 20 bereitgestellter Objekterkennungsalgorithmus identifiziert einander entsprechende oder einander ähnliche Strukturen in dem Suchbereich 28. So kann dem Benutzer für die Zuordnung des Objekts 8 zu dem Merkmal 12 bereits eine Korrekturmatrix vorschlagen werden, beispielsweise in dem der Algorithmus die beiden Elemente zur Deckung bringt.

Ein solches Verfahren kann insbesondere in Echtzeit durchgeführt werden, also während beispielsweise das Flurförderzeug 2 einen Erfassungsbereich der Logistikeinrichtung 4 abfährt und mittels der Scanvorrichtung 14, die Umgebungskarte 6 erstellt. Zu diesem Zweck umfasst das Flurförderzeug 2 beispielsweise eine weitere Anzeigevorrichtung 30. Auf dieser kann die überlagerte Karte angezeigt werden. Dem Fahrer des Flurförderzeugs 2 können während der Scanfahrt Zuordnungen zwischen erfassten Objekten 8 und Merkmalen 12 vorgeschlagen werden. Der Benutzer muss in einem solchen Fall der vorgeschlagenen Zuordnung lediglich noch zustimmen. Bereits während der Scanfahrt kann auf diese Weise die Umgebungskarte 6 sowohl erfasst als auch entzerrt werden.

Das zuvor beschriebene Verfahren zum Erzeugen der Lokalisierungskarte kann durch eine Aktualisierung der Lokalisierungskarte erweitert werden. Dementsprechend können die weiteren zusätzlichen Schritte durchgeführt werden:
Es wird zunächst gemäß einem Schritt a1), eine aktualisierte Umgebungskarte 6 des Erfassungsbereichs der Logistikeinrichtung 4 durch Scannen von in dem Erfassungsbereich vorhandenen Objekten 8 und von weiteren bei der Erzeugung der Umgebungskarte 6 nicht oder an anderer Position erfassten Objekten 8 durchgeführt.

Gemäß einem Verfahrensschritt b1) wird die bereits in Schritt b) erfasste maßstabsgerechte Karte 10 erneut verwendet.

Gemäß einem weiteren Verfahrensschritt c1) wird eine aktualisierte überlagerte Karte angezeigt, beispielsweise auf der Anzeigevorrichtung 24 der externen Verarbeitungseinheit 20 oder auf der weiteren Anzeigevorrichtung 30 des Flurförderzeugs 2. Diese aktualisierte überlagerte Karte umfasst die in Schritt a1) erzeugte aktualisierte Umgebungskarte 6 in Überlagerung mit der maßstabsgerechten Karte 10. Wird die entsprechende Anzeige auf der weiteren Anzeigevorrichtung 30 des Flurförderzeugs 2 vorgenommen, verfügt die Verarbeitungseinheit 18 des Flurförderzeugs 2 über eine entsprechende Funktionalität zur Durchführung des Verfahrens.

Die bereits aus Schritt d) bekannte Zuordnung zwischen dem in der Umgebungskarte 6 vorhandenen Objekt 8 und dem in der maßstabsgerechten Karte 10 vorhandenen konstruktiv ortsfesten Merkmal 12 kann nun in einem Schritt d1) des Verfahrens zum Aktualisieren der Lokalisierungskarte erneut verwendet werden. Mit anderen Worten muss zum Aktualisieren der Lokalisierungskarte keine erneute Zuordnung zwischen dem Objekt 8 und dem Merkmal 12 vorgenommen werden.

Anschließend kann in einem Schritt e1) eine aktualisierte Korrekturmatrix zwischen einer aktualisierten gescannten Position des in der Umgebungskarte 6 vorhandenen Objekts 8, welches dem konstruktiv ortsfesten Merkmal 12 in Schritt d1) zugewiesen wurde, und der maßstabsgerechten Position des konstruktiv ortsfesten Merkmals 12, wie sie in der maßstabsgerechten Karte 10 enthalten ist, erzeugt werden.

Die Schritte des Verwendens d1) und des Erzeugens der aktualisierten Korrekturmatrix e1) werden erneut für mindestens zwei in der Umgebungskarte 6 vorhandene Objekte 8 durchgeführt.

Gemäß einem Schritt g1) wird anschließend die Umgebungskarte 6 anhand der für diese beiden Objekte 8 erzeugten aktualisierten Korrekturmatrix entzerrt.

Gemäß einem Schritt h1) wird die in Schritt g1) entzerrte Umgebungskarte 6 als aktualisierte Lokalisierungskarte für die Positionsbestimmung des Flurförderzeugs 2 in der Logistikeinrichtung 4 ausgegeben.

Sowohl das in Fig. 7 gezeigte Flurförderzeug 2 als auch die externe Verarbeitungseinheit 20 können als Vorrichtung zum Erzeugen einer Lokalisierungskarte für die Positionsbestimmung des Flurförderzeugs 2 in der Logistikeinrichtung 4 eingerichtet sein. Ist die externe Verarbeitungseinheit 20 als eine solche Vorrichtung eingerichtet, greift diese auf Daten der Scanvorrichtung 14 des Flurförderzeugs 2 zurück. Diese Notwendigkeit entfällt, sofern das Flurförderzeug 2 selbst mit der entsprechenden Funktionalität ausgestattet ist, also beispielsweise dessen Verarbeitungseinheit 18 entsprechend eingerichtet ist. Einzelne Verarbeitungsschritte des Verfahrens zum Erzeugen der Lokalisierungskarte können also von dem Flurförderzeug 2 und andere Schritte können von der externen Verarbeitungseinheit 20 durchgeführt werden. Die Aufteilung der Verarbeitungsschritte kann flexibel und beliebig erfolgen, wobei auch in den Verarbeitungsschritten umfasste Teilschritte oder Teilaufgaben zwischen den beiden Einheiten beliebig und flexibel verteilt werden können. Dies betrifft keine Schritte für die die jeweilige Einheit entsprechende Hardware benötigt. Beispielsweise wird die Erfassung der Einzelscans stets von der Einheit durchgeführt, die die Scanvorrichtung 14 umfasst, also i.d.R. von dem Flurförderzeug 2. Beispielsweise erfasst das Flurförderzeug 2 die Einzelscans und fügt diese zu einer verzerrten Umgebungskarte zusammen. Die Entzerrung und Korrektur dieser Karte erfolgt anschließend auf der externen Verarbeitungseinheit 20. Lediglich beispielhaft soll anschließend ein Ausführungsbeispiel beschrieben werden, gemäß dem die externe Verarbeitungseinheit 20 als Vorrichtung zum Erzeugen der Lokalisierungskarte ausgestaltet ist.

Wie bereits erwähnt, erzeugt die Scanvorrichtung 14 des Flurförderzeugs 2 eine Umgebungskarte 6 eines Erfassungsbereichs der Logistikeinrichtung 4, indem mittels der Scanvorrichtung 14 in dem Erfassungsbereich vorhandene Objekte 8 gescannt werden. Die Einzelscans, können zwecks Registrierung an die externe Verarbeitungseinheit 20 übertragen werden.

Die externe Verarbeitungseinheit 20 umfasst eine Erfassungsvorrichtung 32, die dazu eingerichtet ist, die maßstabsgerechte Karte 10 zu erfassen. Beispielsweise handelt es sich bei der Erfassungsvorrichtung 32 um ein Speichermedium auf dem die maßstabsgerechte Karte 10 gespeichert ist oder um eine Schnittstelle, über die die maßstabsgerechte Karte 10 empfangen wird.

Die externe Verarbeitungseinheit 20 umfasst ferner die bereits erwähnte Anzeigevorrichtung 24, auf der die überlagerte Karte angezeigt wird.

Die externe Verarbeitungseinheit 20 umfasst ferner eine Korrekturbefehlerfassungsvorrichtung 34, die eingerichtet ist, den Korrekturbefehl betreffend die Zuordnung zwischen dem in der Umgebungskarte 6 vorhandenen Objekt 8 und dem in der maßstabsgerechten Karte 10 vorhandenen Merkmal 12 zu erfassen. Die Korrekturbefehlerfassungsvorrichtung 34 ist beispielhaft ein Peripheriegerät, wie beispielsweise eine Computermaus.

Die externe Verarbeitungseinheit 20 umfasst ferner eine Korrekturmatrixerzeugungsvorrichtung 36, die eingerichtet ist, die Korrekturmatrix zwischen der gescannten Position des in der Umgebungskarte 6 vorhandenen Objekts 8 und dem Merkmal 12, wie es die maßstabsgerechte Karte 10 zeigt, zu erzeugen. Die Erfassung des Korrekturbefehls und die Berechnung der Korrekturmatrix wird für zumindest zwei Objekte durchgeführt. Mit einer Entzerrungsvorrichtung 38 wird anschließend die Umgebungskarte 6 auf der Grundlage zumindest der Korrekturmatrizen entzerrt. Schließlich wird die entzerrte Umgebungskarte 6 über eine Ausgabevorrichtung 40 ausgegeben und beispielsweise zum Zwecke der Positionsbestimmung an das Flurförderzeug 2 übergeben. Hierzu kommuniziert beispielsweise die Ausgabevorrichtung 40 die Lokalisierungskarte an die Kommunikationseinheit 22 des Flurförderzeugs 2. Die Erfassungsvorrichtung 32, die Korrekturbefehlerfassungsvorrichtung 34, die Korrekturmatrixerzeugungsvorrichtung 36 und/oder die Entzerrungsvorrichtung 38 der externen Verarbeitungseinheit 20 können als funktionelle Einheiten in der externen Verarbeitungseinheit 20 implementiert sein und müssen keine baulich diskreten Einheiten sein. Beispielsweise handelt es sich bei den Einheiten um Funktionen oder Algorithmen, die auf der externen Verarbeitungseinheit 20 ausgeführt werden.

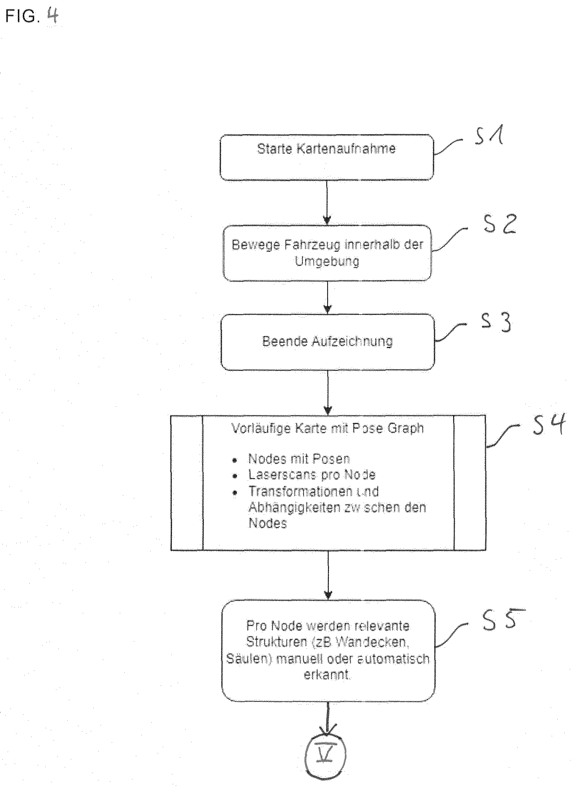

Fig. 4 zeigt ein weiteres Ablaufdiagramm, welches Teile eines Verfahrens zum Erzeugen der Lokalisierungskarte illustriert.

In einem Schritt S1 wird zunächst der Scanvorgang gestartet, bezeichnet als "Starte Kartenaufnahme".

In einem Schritt S2 fährt das Flurförderzeug 2 eine Trajektorie in dem Erfassungsbereich ab, und nimmt dabei Einzelscans der Umgebung auf. Die Einzelscans werden an verschiedenen Posen des Flurförderzeugs 2 aufgenommen. Eine Pose umfasst Informationen zum Ort des Flurförderzeugs 2 und zu einer Orientierung des Flurförderzeugs 2. In Schritt S3 ist dieser Vorgang abgeschlossen.

In einem nächsten Schritt S4 wird die vorläufige (verzerrte) Umgebungskarte 6 erstellt, beispielsweise durch Verarbeitung der Scandaten im Flurförderzeug 2. Die Datenverarbeitung kann ebenso in der externen Verarbeitungseinheit 20 durchgeführt werden. Es liegt eine Trajektorie des Flurförderzeugs 2 mit entsprechenden Posen (jeweils umfassend die Position und die Orientierung) vor, an denen die jeweiligen Einzelscans aufgenommen wurden. Diese Trajektorie wird auch als "Pose Graph" bezeichnet. Jedem Einzelscan wird ein Knoten, auch bezeichnet als "Node", zugeordnet. Für jeden Knoten liegt ein Einzelscan, beispielsweise in Form eines Laserscans, und die zugehörige Pose, an der dieser Scan aufgenommen wurde, vor.

Die jeweilige Pose kann anhand von Daten aus der Fahrzeugodometrie oder auf der Grundlage von Daten einer in dem Flurförderzeug 2 vorhandenen IMU bestimmt werden. Ebenso kann zumindest eine relative Information über die Pose aus dem Matching der Einzelscans gewonnen werden, wie auch nachfolgend erläutert wird. Außerdem sind Kombinationen aus mehreren oder allen Methoden der Postionsbestimmung möglich, beispielsweise ein sog. Sensor Fusion.

Die vorläufige (verzerrte) Umgebungskarte 6 wird erstellt, indem die Einzelscans zu weit wie möglich passend zu der Umgebungskarte 6 zusammengesetzt werden. Dieser Vorgang wird vielfach als "Matching" bezeichnet. Wie dieser Vorgang gemäß dem konkreten Ausführungsbeispiel erfolgt, wird im Kontext der Schritte S5 und S6 erläutert.

Es werden zunächst beispielsweise einander entsprechende Strukturen in insbesondere aufeinanderfolgenden Einzelscans identifiziert. Es können ebenso alle Punkte der beiden Einzelscans so zueinander ausgerichtet werden, dass die beiden Einzelscans eine maximale pixelweise Überlagerung aufweisen. Anhand der Übereinstimmung der Strukturen oder der pixelweisen Übereinstimmung werden die Einzelscans zueinander ausgerichtet, beispielsweise verschoben und/oder rotiert. Zusätzlich kann für das Matching die Pose des Flurförderzeugs 2, an der der jeweilige Einzelscan aufgenommen wurde, berücksichtigt werden. Die relativen Posen, also der Unterschied von einer Pose zu der nachfolgenden Pose, können auch aus dem Matching der zugehörigen Einzelscans gewonnen werden. So ergibt sich die relative Pose beispielsweise aus der erforderlichen Verschiebung und/oder Rotation der aufeinanderfolgenden Einzelscans. Beide Ansätze können miteinander kombiniert werden. Es können also sowohl Informationen, die beispielsweise der Fahrzeugodometrie entnommen sind, als auch Informationen aus dem Matching der Einzelscans verarbeitet werden. Im Ergebnis werden entsprechende Transformationen berechnet, welche den relativen Übergang zwischen den einzelnen Posen, insbesondere von aufeinanderfolgenden Posen, beschreiben. Auf der Grundlage dieser Transformationen werden anschließend die Einzelscans zu der verzerrten Umgebungskarte 6 zusammengesetzt.

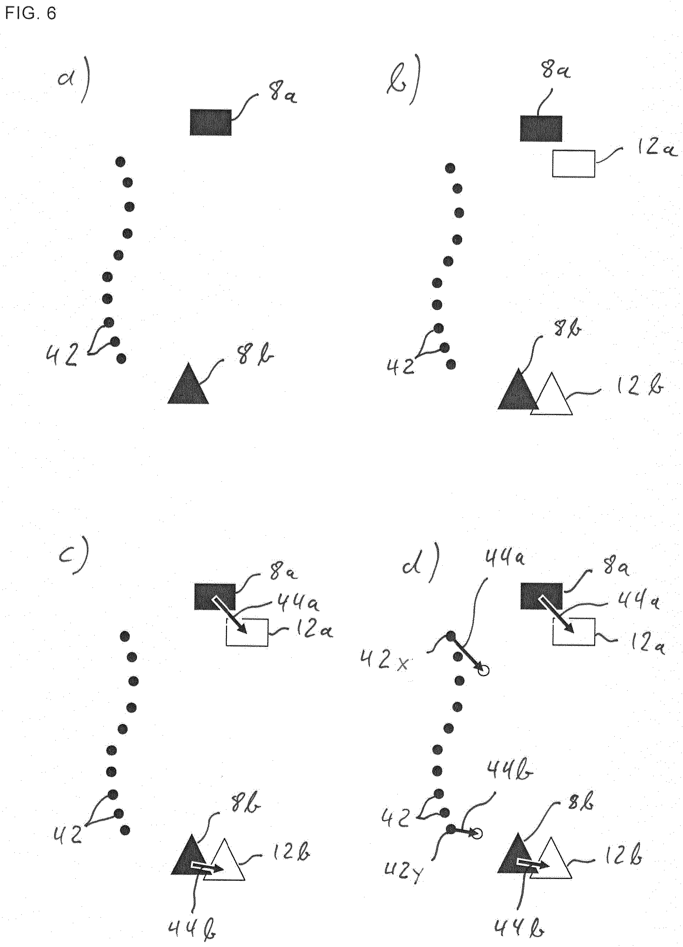

Diese Situation ist in Fig. 6a) illustriert. Schematisch und vereinfacht sind ein erstes Objekt 8a und ein zweites Objekt 8b sowie eine Mehrzahl von Posen 42, von denen aus Gründen der Übersichtlichkeit lediglich einige mit Bezugszeichen versehen sind, dargestellt. Die Einzelscans sind an den Posen 42 erfasst worden und stellen gleichzeitig Knoten für das Matching der Einzelscans dar.

In Schritt S5 werden, wie bereits erläutert, aus den für jeden Knoten vorliegenden Einzelscans jeweils relevante Strukturen extrahiert, zum Beispiel Wandecken oder Säulen. Diese Strukturen können manuell oder automatisch erkannt werden. Bei den relevanten Strukturen handelt es sich beispielsweise um das in Fig. 6a) dargestellte erste und zweite Objekt 8a, 8b.

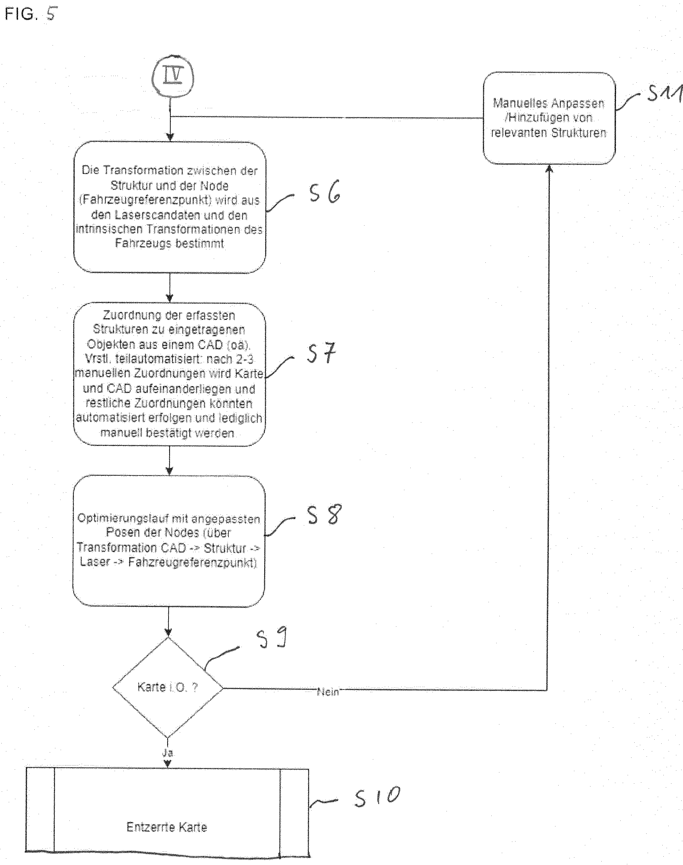

Es erfolgt der Übergang zu dem in Fig. 5 dargestellten Teil des Ablaufdiagramms. Dieses beginnt mit Schritt S6. Es werden die Transformationen zwischen den einzelnen Knoten bzw. Posen ermittelt, um die Einzelscans zu der Umgebungskarte 6 zusammenzusetzen. Es erfolgt eine relative Transformation der insbesondere aufeinanderfolgenden Einzelscans beispielsweise bereits im Rahmen der Kartenaufzeichnung, ähnlich wie bei einem sog. SLAM-Verfahren (SLAM = Simultaneous Localization and Mapping; zu Deutsch: Simultane Positionsbestimmung und Kartierung). Diese vorläufige Umgebungskarte 6 umfasst, wie oben ausgeführt, entsprechende Fehler.

Es können beim Zusammensetzen der Einzelscans außerdem bauliche Abstände der als Scanvorrichtung 14 eingesetzten einzelnen Scanner, die an verschiedenen Orten des Flurförderzeugs 2 angebracht sein können, berücksichtigt werden. Eine intrinsische Transformation der Scandaten ist bei der Verwendung mehrerer Scanner sinnvoll, um die Scandaten der einzelnen Scanner auf einen gemeinsamen Referenzpunkt zu beziehen, beispielsweise auf den Fahrzeugdrehpunkt. Eine solche intrinsische Transformation wird typischerweise vor dem Matching der Einzelscans vorgenommen.

Nach der Erfassung der Einzelscans und dem Zusammenfügen dieser Einzelscans zu der (verzerrten) Umgebungskarte 6 schließt sich die Entzerrung der Umgebungskarte 6 an.

In Schritt S7 erfolgt zunächst die Zuordnung zwischen den in den Scandaten erfassten und vorhandenen Objekten, beispielsweise des ersten Objekts 8a und des zweiten Objekts 8b, zu in der maßstabsgerechten Karte, bei der es sich beispielsweise um eine CAD-Karte handelt, vorhandenen konstruktiv ortsfesten Merkmalen 12 der Logistikeinrichtung 4.

Dies illustriert Fig. 6b). Dem ersten Objekt 8a wird ein erstes Merkmal 12a zugeordnet und dem zweiten Objekt 8b wird ein zweites Merkmal 12b der Logistikeinrichtung 4 zugeordnet. Dieser Schritt entspricht der Erfassung des Korrekturbefehls (Schritt d)). Indem Strukturen innerhalb der gescannten Umgebungskarte 6 Merkmalen 12 oder Strukturen des Layouts oder der CAD Darstellung der Logistikeinrichtung 4 zugeordnet werden, können die einzelnen Transformationen zwischen den aufeinanderfolgenden Knoten verändert oder angepasst werden, wodurch die Umgebungskarte 6 entzerrt werden kann.

Die sich anschließende Korrektur der Umgebungskarte (entspricht Schritt g)) erfolgt in dem Ablaufdiagramm in Schritt S8, im Rahmen eines Optimierungslaufs mit angepassten Posen für die Einzelscans.

Zunächst wird jedoch eine Korrekturmatrix erzeugt, durch deren Anwendung auf die gescannte Position des in der Umgebungskarte 6 vorhandenen Objekts 8, welches zuvor dem ortsfesten Merkmal 12 in Schritt d) zugeordnet wurde, die zuvor gescannte Position in die maßstabsgerechte Position des konstruktiv ortsfesten Merkmals 12, wie sie in der maßstabsgerechten Karte 10 enthalten ist, überführbar ist. Dies ist in Fig. 6c) angedeutet.

Als Korrekturmatrix ist beispielhaft der Spezialfall eines Korrekturvektors dargestellt. Konkret geht durch Anwendung eines ersten Korrekturvektors 44a auf die gescannte Position des ersten Objekts 8a dessen Position in die maßstabsgerechte Position des ersten ortsfesten Merkmals 12a über. Durch Anwendung des zweiten Korrekturvektors 44b geht die gescannte zweite Position des zweiten Objekts 8b in die maßstabsgerechte zweite Position des zweiten ortsfesten Merkmals 12b über. Die Bestimmung des ersten und zweiten Korrekturvektors 44a, 44b, und ebenso allgemein die Bestimmung einer ersten und zweiten Korrekturmatrix, kann beispielsweise folgendermaßen vorgenommen werden.

Die gescannte Umgebungskarte 6 und die maßstabsgerechte Karte 10 werden nebeneinander oder in Überlagerung auf der Anzeigevorrichtung 24, 30 dargestellt. Miteinander korrespondierende Punkte des Objektes 8 und des konstruktiv ortsfesten Merkmals 12 werden markiert, beispielsweise durch eine Benutzereingabe. Beispielsweise werden einander jeweils entsprechende Kanten oder Ecken einer Säule oder einer Tordurchfahrt in beiden Kartendarstellungen markiert. Dies könnten die Ecken oder Kanten des ersten bzw. zweiten Objekts 8a, 8b sein, bei denen es sich beispielsweise um eine Säule und eine Torduchfahrt handelt. Aus der Differenz dieser beiden Markierungen ergibt sich der Korrekturvektor. Dieser Vorgang ist in Fig. 6c) illustriert.

Es erfolgt anschließend die Anwendung der entsprechenden Korrekturvektoren 44a, 44b (oder allgemein der entsprechenden Korrekturmatrizen) auf die Posen 42, an denen die Einzelscans ermittelt wurden. Dies illustriert Fig. 6d). Beispielhaft wird der erste Korrekturvektor 44a auf eine Pose 42x angewandt. Der zweite Korrekturvektor 44b wird auf eine Pose 42y angewandt.

Eine vollständige Korrektur der Umgebungskarte 6 erfolgt, in dem auf die einzelnen zwischen der Pose 42x und der Pose 42y liegenden weiteren Posen 42 ebenfalls Korrekturvektoren oder allgemein entsprechende zusätzliche Korrekturmatrizen angewandt werden. Diese zusätzlichen Korrekturvektoren (im dargestellten Beispiel) oder allgemein zusätzliche Korrekturmatrizen können beispielsweise durch Interpolation zwischen dem ersten Korrekturvektor 44a und dem zweiten Korrekturvektor 44b berechnet werden. Andere Optimierungsverfahren können ebenso zur Anwendung kommen, beispielsweise eine Fehlerminimierung anhand einer Kovarianzmatrix.

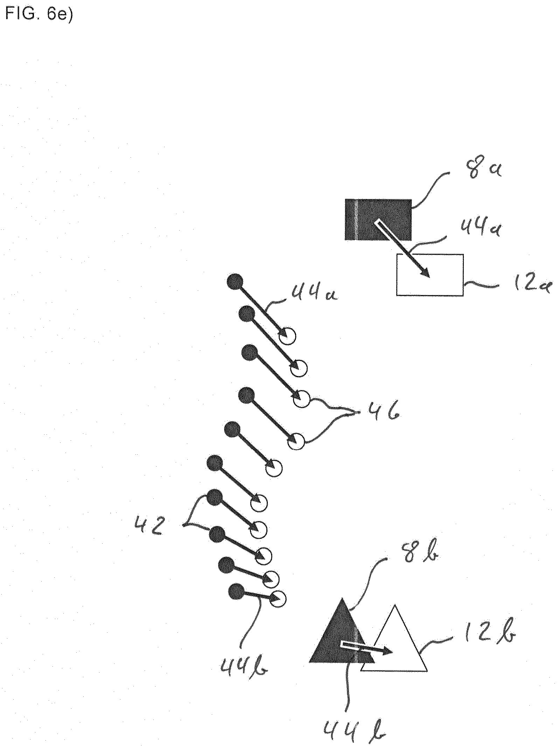

Fig. 6e) illustriert diesen Vorgang. Auf die zwischen den Posen 42x und 42y liegenden weiteren Posen 42 werden entsprechende berechnete zusätzliche Korrekturmatrizen, oder wie im konkreten Beispiel dargestellt Korrekturvektoren, angewandt, die mit Pfeilen angedeutet sind. Durch Anwendung dieser zusätzlichen Korrekturvektoren gehen die Posen 42 in korrigierte Posen 46 über.

Werden nun die an den entsprechenden Posen 42 aufgenommenen Einzelscans auf der Grundlage der Orte und Orientierungen der korrigierten Posen 46 zusammengesetzt, kann die Umgebungskarte 6 entzerrt werden.

Im Schritt S9 wird eine Überprüfung der Lokalisierungskarte vorgenommen, beispielsweise durch eine Benutzerseitige visuelle Kontrolle. Wird in diesem Schritt die Lokalisierungskarte als ausreichend erachtet, wird die Lokalisierungskarte in Schritt S10 ausgegeben, bezeichnet als "entzerrte Karte". Wird hingegen in Schritt S9 die Lokalisierungskarte als noch nicht ausreichend angesehen, so können in einem weiteren Schritt S11 weitere Objekte 8 und deren zugehörige Merkmale 12 der Analyse hinzugefügt werden, bezeichnet als "Hinzufügen von relevanten Strukturen".

### Bezugszeichenliste

- 2: Flurförderzeug
- 4: Logistikeinrichtung
- 6: Umgebungskarte
- 8: Objekt (erste Klasse)
- 8a: erstes Objekt
- 8b: zweites Objekt
- 10: maßstabsgerechte Karte
- 12: Merkmale
- 12a: erstes Merkmal
- 12b: zweites Merkmal
- 14: Scanvorrichtung
- 16: Speichermedium
- 18: Verarbeitungseinheit
- 20: externe Verarbeitungseinheit
- 22: Kommunikationseinheit
- 24: Anzeigevorrichtung
- 26: Objekt (zweite Klasse)
- 28: Suchbereich
- 30: weitere Anzeigevorrichtung
- 32: Erfassungsvorrichtung
- 34: Korrekturbefehlerfassungsvorrichtung
- 36: Korrekturmatrixerzeugungsvorrichtung
- 38: Entzerrungsvorrichtung
- 40: Ausgabevorrichtung
- 42: Pose
- 44a: erster Korrekturvektor
- 44b: zweiter Korrekturvektor
- 46: korrigierte Posen

## Patentansprüche

1. Verfahren zum Erzeugen einer Lokalisierungskarte für die Positionsbestimmung eines Flurförderzeugs (2) in einer Logistikeinrichtung (4), die folgenden Schritte aufweisend:
a) Erzeugen einer Umgebungskarte (6) eines Erfassungsbereichs der Logistikeinrichtung (4) durch Scannen von in dem Erfassungsbereich vorhandenen Objekten (8),
wobei das Verfahren zum Erzeugen einer Lokalisierungskarte **gekennzeichnet ist durch** die folgenden weiteren Schritte:
b) Erfassen einer maßstabsgerechten Karte (10) zumindest des Erfassungsbereichs, wobei in der maßstabsgerechten Karte (10) konstruktiv ortsfeste Merkmale (12) der Logistikeinrichtung (4) vorhanden sind,
c) Anzeigen der erzeugten Umgebungskarte (6) und der maßstabsgerechten Karte (10) auf einer Anzeigevorrichtung (24),
d) Erfassen eines Korrekturbefehls betreffend eine Zuordnung zwischen einem in der Umgebungskarte (6) vorhandenen Objekt (8) und einem in der maßstabsgerechten Karte (10) vorhandenen konstruktiv ortsfesten Merkmal (12),
e) Erzeugen einer Korrekturmatrix, insbesondere für in der Umgebungskarte (6) an verzerrter Position dargestellte Objekte (8), wobei durch Anwendung der Korrekturmatrix auf eine gescannte Position des in der Umgebungskarte (6) vorhandenen Objekts (8), welches dem konstruktiv ortsfesten Merkmal (12) in Schritt d) zugeordnet wurde, diese gescannte Position in eine maßstabsgerechte Position des konstruktiv ortsfesten Merkmals (12), wie sie in der maßstabsgerechten Karte (10) enthalten ist, überführbar ist,
f) Durchführen der Schritte d) und e) zumindest für ein in der Umgebungskarte (6) vorhandenes erstes Objekt (8) und für ein in der Umgebungskarte (6) vorhandenes zweites Objekt (8),
g) Entzerren der Umgebungskarte (6) anhand zumindest einer für das erste Objekt (8) erzeugten ersten Korrekturmatrix und einer für das zweite Objekt (8) erzeugten zweiten Korrekturmatrix,
h) Ausgeben der in Schritt g) entzerrten Umgebungskarte (6) als Lokalisierungskarte für die Positionsbestimmung des Flurförderzeugs (2) in der Logistikeinrichtung (4).

2. Verfahren nach Anspruch 1, bei dem in Schritt a) die Umgebungskarte (6) erzeugt wird, indem eine Vielzahl von Einzelscans von in dem Erfassungsbereich vorhandenen Objekten (8) durchgeführt werden und die Einzelscans durch Registrierung zu der Umgebungskarte (6) zusammengefügt werden, wobei die Umgebungskarte (6) insbesondere eine Punktwolke oder ein Belegungsgitter ist.

3. Verfahren nach Anspruch 1 oder 2, bei dem die Logistikeinrichtung (2) auf der Grundlage der maßstabsgerechten Karte (10) realisiert wurde.

4. Verfahren nach einem der Ansprüche 1 bis 3, bei dem in der Umgebungskarte (6) eine erste Klasse von Objekten (8) vorhanden ist, die konstruktiv ortsfesten Merkmalen (12) zuweisbar sind oder zugewiesen werden, und eine zweite Klasse von Objekten (8) vorhanden ist, die nicht konstruktiv ortsfesten Merkmalen (12) zuweisbar sind oder zugewiesen werden, wobei die korrigierte Umgebungskarte (6), die als Lokalisierungskarte für die Positionsbestimmung des Flurförderzeugs (2) in Schritt h) ausgegeben wird, sowohl Objekte (8) der ersten als auch der zweiten Klasse umfasst.

5. Verfahren nach einem der Ansprüche 1 bis 4, bei dem in Schritt d) ein von einem Benutzer erzeugter Korrekturbefehl erfasst wird.

6. Verfahren nach einem der Ansprüche 1 bis 4, bei dem der in Schritt d) erfasste Korrekturbefehl einen Suchbereich (28) in der in Schritt c) angezeigten Umgebungskarte (6) und/oder der maßstabsgerechten Karte (10) festlegt, wobei in dem Suchbereich (28) das in der Umgebungskarte (6) vorhandene Objekt (8) und das in der maßstabsgerechten Karte (10) vorhandene konstruktiv ortsfeste Merkmal (12) vorhanden sind, wobei die Zuordnung zwischen dem in der Umgebungskarte (6) vorhandenen Objekt (8) zu dem in der maßstabsgerechten Karte (12) vorhandenen konstruktiv ortsfesten Merkmal (12) durch einen Objekterkennungsalgorithmus durchgeführt wird oder von einem Benutzer durch einen Objekterkennungsalgorithmus assistiert durchgeführt wird.

7. Verfahren nach einem der Ansprüche 1 bis 6, bei dem Schritt d) während der Durchführung von Schritt a) erfolgt.

8. Verfahren zum Aktualisieren einer Lokalisierungskarte, bei dem gemäß einem Verfahren nach einem der Ansprüche 1 bis 7 eine Lokalisierungskarte erzeugt wird und zum Aktualisieren dieser Lokalisierungskarte die folgenden Schritte durchgeführt werden:
a1) Erzeugen einer aktualisierten Umgebungskarte (6) des Erfassungsbereichs der Logistikeinrichtung (2) durch Scannen der in dem Erfassungsbereich vorhandenen Objekte (8) und von weiteren bei der Erzeugung der Umgebungskarte nicht oder an anderer Position erfassten Objekten (8),
b1) Verwenden der in Schritt b) erfassten maßstabsgerechten Karte (12),
c1) Anzeigen einer erzeugten aktualisierten Umgebungskarte (6) und der maßstabsgerechten Karte (12) auf der Anzeigevorrichtung (24),
d1) Verwenden der in Schritt d) erfassten Zuordnung zwischen dem in der Umgebungskarte (6) vorhandenen Objekt (8) und dem in der maßstabsgerechten Karte (10) vorhandenen konstruktiv ortsfesten Merkmal (12),
e1) Erzeugen einer aktualisierten Korrekturmatrix, insbesondere für in der aktualisierten Umgebungskarte (6) an verzerrter Position dargestellte Objekte (8), wobei durch Anwendung der aktualisierten Korrekturmatrix auf eine aktualisierte gescannte Position des in der Umgebungskarte (6) vorhandenen Objekts (8), welches dem konstruktiv ortsfesten Merkmal (12) in Schritt d1) zugeordnet wurde, diese aktualisierte gescannte Position in die maßstabsgerechte Position des konstruktiv ortsfesten Merkmals (12), wie sie in der maßstabsgerechten Karte (10) enthalten ist, überführbar ist,
f1) Durchführen der Schritte d1) und e1) zumindest für ein in der Umgebungskarte (6) vorhandenes erstes Objekt (8) und für ein in der Umgebungskarte (6) vorhandenes zweites Objekt (8),
g1) Entzerren der Umgebungskarte (6) anhand zumindest einer für das erste Objekt (8) erzeugten aktualisierten ersten Korrekturmatrix und einer für das zweite Objekt (8) erzeugten aktualisierten zweiten Korrekturmatrix,
h1) Ausgeben der in Schritt g1) entzerrten Umgebungskarte (6) als aktualisierte Lokalisierungskarte für die Positionsbestimmung des Flurförderzeugs (2) in der Logistikeinrichtung (4).

9. Vorrichtung zum Erzeugen einer Lokalisierungskarte für die Positionsbestimmung eines Flurförderzeugs (2) in einer Logistikeinrichtung (4), aufweisend:
a) eine Scanvorrichtung (14) zum Erzeugen einer Umgebungskarte (6) eines Erfassungsbereichs der Logistikeinrichtung (2), wobei die Scanvorrichtung (14) eingerichtet ist, in dem Erfassungsbereich vorhandene Objekte (8) zu scannen,
wobei die Vorrichtung ferner **gekennzeichnet ist durch**:
b) eine Erfassungsvorrichtung (32), die eingerichtet ist, eine maßstabsgerechte Karte (10) zumindest des Erfassungsbereichs zu erfassen, wobei in der maßstabsgerechten Karte (10) konstruktiv ortsfeste Merkmale (12) vorhanden sind,
c) eine Anzeigevorrichtung (24), die eingerichtet ist, die erzeugte Umgebungskarte (6) und die maßstabsgerechte Karte (10) anzuzeigen,
d) eine Korrekturbefehlerfassungsvorrichtung (34), die eingerichtet ist, einen Korrekturbefehl betreffend eine Zuordnung zwischen einem in der Umgebungskarte (6) vorhandenen Objekt (8) und einem in der maßstabsgerechten Karte (10) vorhandenen konstruktiv ortsfesten Merkmal (12) zu erfassen,
e) eine Korrekturmatrixerzeugungsvorrichtung (36), die eingerichtet ist, insbesondere für in der Umgebungskarte (6) an verzerrter Position dargestellte Objekte (8), eine Korrekturmatrix zu erzeugen, wobei **durch** Anwendung der Korrekturmatrix auf die gescannte Position des in der Umgebungskarte (6) vorhandenen Objekts (8), welches von der Korrekturbefehlerfassungsvorrichtung (36) dem konstruktiv ortsfesten Merkmal (12) zuweisbar ist oder zugeordnet wurde, diese gescannte Position in eine maßstabsgerechte Position des konstruktiv ortsfesten Merkmals (12), wie sie in der maßstabsgerechten Karte (10) enthalten ist, überführbar ist,
f) wobei die Korrekturbefehlerfassungsvorrichtung (34) und die Korrekturmatrixerzeugungsvorrichtung (36) dazu eingerichtet sind, die Zuordnung und die Korrekturmatrixerzeugung zumindest für ein in der Umgebungskarte (6) vorhandenes erstes Objekt (8) und für ein in der Umgebungskarte (6) vorhandenes zweites Objekt (8) durchzuführen,
g) eine Entzerrungsvorrichtung (38), die eingerichtet ist, die Umgebungskarte (6) anhand zumindest einer für das erste Objekt (8) erzeugten ersten Korrekturmatrix und einer für das zweite Objekt (8) erzeugten zweiten Korrekturmatrix zu entzerren,
h) eine Ausgabevorrichtung (40), die dazu eingerichtet ist, die von der Entzerrungsvorrichtung (38) entzerrte Umgebungskarte (6) als Lokalisierungskarte für die Positionsbestimmung des Flurförderzeugs (2) in der Logistikeinrichtung (4) auszugeben.

10. Vorrichtung nach Anspruch 9, wobei die Scanvorrichtung (14) dazu eingerichtet ist, die Umgebungskarte (6) zu erzeugen, indem eine Vielzahl von Einzelscans von in dem Erfassungsbereich vorhandenen Objekten (8) durchgeführt werden und die Einzelscans durch Registrierung zu der Umgebungskarte (6) zusammengefügt werden, wobei die Umgebungskarte (6) insbesondere eine Punktwolke oder ein Belegungsgitter ist.

11. Vorrichtung nach Anspruch 9 oder 10, wobei in der Umgebungskarte (6) eine erste Klasse von Objekten (8) vorhanden ist, die konstruktiv ortsfesten Merkmalen (12) zuweisbar sind oder zugewiesen werden, und eine zweite Klasse von Objekten (8) vorhanden ist, die nicht konstruktiv ortsfesten Merkmalen (12) zuweisbar sind oder zugewiesen werden, wobei die korrigierte Umgebungskarte (6), die als Lokalisierungskarte für die Positionsbestimmung des Flurförderzeugs (2) von der Ausgabevorrichtung (40) ausgebbar ist oder ausgegeben wird, sowohl Objekte (8) der ersten als auch der zweiten Klasse umfasst.

12. Vorrichtung nach einem der Ansprüche 9 bis 11, wobei die Korrekturbefehlerfassungsvorrichtung (34) dazu eingerichtet ist, einen von einem Benutzer erzeugten Korrekturbefehl zu erfassen.

13. Vorrichtung nach einem der Ansprüche 9 bis 11, wobei die Korrekturbefehlerfassungsvorrichtung (34) dazu eingerichtet ist, einen Korrekturbefehl zu erfassen, der einen Suchbereich in der von der Anzeigevorrichtung (24) anzeigbaren oder angezeigten Umgebungskarte (6) und/oder maßstabsgerechten Karte (10) festlegt, wobei in dem Suchbereich (28) das in der Umgebungskarte (6) vorhandene Objekt (8) und das in der maßstabsgerechten Karte (10) vorhandene konstruktiv ortsfeste Merkmal (12) vorhanden sind, wobei die Korrekturbefehlerfassungsvorrichtung (34) ferner dazu eingerichtet ist die Zuordnung zwischen dem in der Umgebungskarte (6) vorhandenen Objekt (8) zu dem in der maßstabsgerechten Karte (10) vorhandenen konstruktiv ortsfesten Merkmal (12) durch einen Objekterkennungsalgorithmus durchzuführen oder einen Benutzer durch einen Objekterkennungsalgorithmus zu assistieren.

14. Vorrichtung nach einem der Ansprüche 9 bis 13, wobei die Korrekturbefehlerfassungsvorrichtung (34) dazu eingerichtet ist, den Korrekturbefehl zu erfassen während die Scanvorrichtung (14) die Umgebungskarte (6) des Erfassungsbereichs der Logistikeinrichtung (4) erfasst.

15. Vorrichtung zum Aktualisieren einer Lokalisierungskarte, aufweisend eine Vorrichtung nach einem der Ansprüche 9 bis 14, mit der eine Lokalisierungskarte erzeugbar ist oder erzeugt wird, wobei ferner:
a1) die Scanvorrichtung (14) dazu eingerichtet ist, eine aktualisierte Umgebungskarte (6) des Erfassungsbereichs der Logistikeinrichtung (4) durch Scannen der in dem Erfassungsbereich vorhandenen Objekte (8) und von weiteren bei der Erzeugung der Umgebungskarte (6) nicht oder an anderer Position erfassten Objekten (8) zu erzeugen,
b1) die Erfassungsvorrichtung (32) dazu eingerichtet ist, die erfasste maßstabsgerechte Karte (10) zu verwenden,
c1) die Anzeigevorrichtung (54) dazu eingerichtet ist, eine von der Scanvorrichtung (14) erzeugte aktualisierte Umgebungskarte (6) und die maßstabsgerechte Karte (10) anzuzeigen,
d1) die Korrekturbefehlerfassungsvorrichtung (34) dazu eingerichtet ist, die erfasste Zuordnung zwischen dem in der Umgebungskarte (6) vorhandenen Objekt (8) und dem in der maßstabsgerechten Karte (10) vorhandenen konstruktiv ortsfesten Merkmal (12) zu verwenden,
e1) die Korrekturmatrixerzeugungsvorrichtung (36) dazu eingerichtet ist, insbesondere für in der aktualisierten Umgebungskarte (6) an verzerrter Position dargestellte Objekte (8), eine aktualisierte Korrekturmatrix zu erzeugen, wobei durch Anwendung der aktualisierte Korrekturmatrix auf eine aktualisierte gescannte Position des in der Umgebungskarte (6) vorhandenen Objekts (8), welches dem konstruktiv ortsfesten Merkmal (12) von der Korrekturbefehlerfassungsvorrichtung (36) zugeordnet wurde, diese aktualisierte gescannte Position in die maßstabsgerechte Position des konstruktiv ortsfesten Merkmals (12), wie sie in der maßstabsgerechten Karte (10) enthalten ist, überführbar ist,
f1) die Korrekturbefehlerfassungsvorrichtung (34) und die Korrekturmatrixerzeugungsvorrichtung (36) dazu eingerichtet sind, die Zuordnung und die Korrekturmatrixerzeugung zumindest für ein in der Umgebungskarte (6) vorhandenes erstes Objekt (8) und für ein in der Umgebungskarte (6) vorhandenes zweites Objekt (8) durchzuführen,
g1) die Entzerrungsvorrichtung (38) dazu eingerichtet ist, die Umgebungskarte (6) anhand zumindest einer für das erste Objekt (8) erzeugten aktualisierten ersten Korrekturmatrix und einer für das zweite Objekt (8) erzeugten aktualisierten zweiten Korrekturmatrix zu entzerren,
h1) die Ausgabevorrichtung (40) dazu eingerichtet ist, die entzerrte Umgebungskarte (6) als aktualisierte Lokalisierungskarte für die Positionsbestimmung des Flurförderzeugs (2) in der Logistikeinrichtung (4) auszugeben.

## Claims

1. A method for creating a localization map for determining the position of an industrial truck (2) in a logistics facility (4), having the following steps:
a) creating an environment map (6) of a detection area of the logistics facility (4) by scanning objects (8) present in the detection area,
wherein the method for creating a localization map is **characterized by** the following further steps:
b) detecting a scale map (10) at least of the detection area, wherein structurally stationary features (12) of the logistics facility (4) are present in the scale map (10),
c) displaying the created environment map (6) and the scale map (10) on a display device (24),
d) detecting a correction command regarding an allocation between an object (8) present in the environment map (6) and a structurally stationary feature (12) present in the scale map (10),
e) creating a correction matrix, in particular for objects (8) represented at a distorted position in the environment map (6), wherein by applying the correction matrix to a scanned position of the object (8) present in the environment map (6), which was allocated to the structurally stationary feature (12) in step d), said scanned position can be converted into a scale position of the structurally stationary feature (12) as it is contained in the scale map (10),
f) performing the steps d) and e) at least for a first object (8) present in the environment map (6) and for a second object (8) present in the environment map (6),
g) equalizing the environment map (6) with the aid of at least one first correction matrix created for the first object (8) and a second correction matrix created for the second object (8),
h) outputting the environment map (6) equalized in step g) as a localization map for determining the position of the industrial truck (2) in the logistics facility (4).

2. The method according to Claim 1, in which the environment map (6) is created in step a) by performing a plurality of individual scans of objects (8) present in the detection area and by combining the individual scans by registration to form the environment map (6), wherein the environment map (6) is in particular a point cloud or an occupancy grid.

3. The method according to Claim 1 or 2, in which the logistics facility (2) was realized on the basis of the scale map (10).

4. The method according to any one of Claims 1 to 3, in which a first class of objects (8) which can be assigned or are assigned to structurally stationary features (12), and a second class of objects (8) which cannot be assigned to structurally stationary features (12) are present in the environment map (6), wherein the corrected environment map (6) which is output as a localization map for determining the position of the industrial truck (2) in step h) comprises both objects (8) of the first and the second class.

5. The method according to any one of Claims 1 to 4, in which a correction command created by a user is detected in step d).

6. The method according to any one of Claims 1 to 4, in which the correction command detected in step d) specifies a search area (28) in the environment map (6) displayed in step c) and/or the scale map (10), wherein the object (8) present in the environment map (6) and the structurally stationary feature (12) present in the scale map (10) are present in the search area (28), wherein the allocation between the object (8) present in the environment map (6) to the structurally stationary feature (12) present in the scale map (12) is performed by an object recognition algorithm or is performed by a user assisted by an object recognition algorithm.

7. The method according to any one of Claims 1 to 6, in which step d) is carried out during the performance of step a).

8. A method for updating a localization map, in which a localization map is created according to a method according to any one of Claims 1 to 7 and the following steps are performed in order to update said localization map:
a1) creating an updated environment map (6) of the detection area of the logistics facility (2) by scanning the objects (8) present in the detection area and further objects (8) which are not detected or are detected at a different position during the creation of the environment map,
b1) using the scale map (12) detected in step b),
c1) displaying a created updated environment map (6) and the scale map (12) on the display device (24),
d1) using the allocation detected in step d) between the object (8) present in the environment map (6) and the structurally stationary feature (12) present in the scale map (10),
e1) creating an updated correction matrix, in particular for objects (8) represented at a distorted position in the updated environment map (6), wherein by applying the updated correction matrix to an updated scanned position of the object (8) present in the environment map (6), which was allocated to the structurally stationary feature (12) in step d1), said updated scanned position can be converted into the scale position of the structurally stationary feature (12), as it is contained in the scale map (10),
f1) performing the steps d1) and e1) at least for a first object (8) present in the environment map (6) and for a second object (8) present in the environment map (6),
g1) equalizing the environment map (6) with the aid of at least one updated first correction matrix created for the first object (8) and one updated second correction matrix created for the second object (8),
h1) outputting the environment map (6) equalized in step g1) as an updated localization map for determining the position of the industrial truck (2) in the logistics facility (4).

9. A device for creating a localization map for determining the position of an industrial truck (2) in a logistics facility (4), having:
a) a scanning device (14) for creating an environment map (6) of a detection area of the logistics facility (2), wherein the scanning device (14) is designed to scan objects (8) present in the detection area,
wherein the device is further **characterized by**:
b) a detection device (32) which is designed to detect a scale map (10) at least of the detection area, wherein structurally stationary features (12) are present in the scale map (10),
c) a display device (24) which is designed to display the created environment map (6) and the scale map (10),
d) a correction command detection device (34) which is designed to detect a correction command regarding an allocation between an object (8) present in the environment map (6) and a structurally stationary feature (12) present in the scale map (10),
e) a correction matrix creating device (36) which is designed to create a correction matrix in particular for objects (8) represented at a distorted position in the environment map (6), wherein by applying the correction matrix to the scanned position of the object (8) present in the environment map (6), which can be assigned or was allocated by the correction command detection device (36) to the structurally stationary feature (12), said scanned position can be converted into a scale position of the structurally stationary feature (12), as it is contained in the scale map (10),
f) wherein the correction command detection device (34) and the correction matrix creating device (36) are designed to perform the allocation and the correction matrix creation at least for a first object (8) present in the environment map (6) and for a second object (8) present in the environment map (6),
g) an equalizing device (38) which is designed to equalize the environment map (6) with the aid of at least one first correction matrix created for the first object (8) and a second correction matrix created for the second object (8),
h) an output device (40) which is designed to output the environment map (6) equalized by the equalizing device (38) as a localization map for determining the position of the industrial truck (2) in the logistics facility (4).

10. The device according to Claim 9, wherein the scanning device (14) is designed to create the environment map (6) by performing a plurality of individual scans of objects (8) present in the detection area and by combining the individual scans by registration to form the environment map (6), wherein the environment map (6) is in particular a point cloud or an occupancy grid.

11. The device according to Claim 9 or 10, wherein a first class of objects (8) which can be or are assigned to structurally stationary features (12), and a second class of objects (8) which cannot be assigned to structurally stationary features (12) are present in the environment map (6), wherein the corrected environment map (6) which can be output or is output by the output device (40) as a localization map for determining the position of the industrial truck (2) comprises both objects (8) of the first and the second class.

12. The device according to any one of Claims 9 to 11, wherein the correction command detection device (34) is designed to detect a correction command created by a user.

13. The device according to any one of Claims 9 to 11, wherein the correction command detection device (34) is designed to detect a correction command which specifies a search area in the environment map (6) which can be or is displayed by the display device (24) and/or scale map (10), wherein the object (8) present in the environment map (6) and the structurally stationary feature (12) present in the scale map (10) are present in the search area (28), wherein the correction command detection device (34) is further designed to perform the allocation between the object (8) present in the environment map (6) to the structurally stationary feature (12) present in the scale map (10) by an object recognition algorithm or to assist a user by an object recognition algorithm.

14. The device according to any one of Claims 9 to 13, wherein the correction command detection device (34) is designed to detect the correction command while the scanning device (14) detects the environment map (6) of the detection area of the logistics facility (4).

15. A device for updating a localization map, having a device according to any one of Claims 9 to 14, with which a localization map can be created or is created, wherein further:
a1) the scanning device (14) is designed to create an updated environment map (6) of the detection area of the logistics facility (4) by scanning the objects (8) present in the detection area and further objects (8) which are not detected or are detected at a different position during the creation of the environment map (6),
b1) the detection device (32) is designed to use the detected scale map (10),
c1) the display device (54) is designed to display an updated environment map (6) created by the scanning device (14) and the scale map (10),
d1) the correction command detection device (34) is designed to use the detected allocation between the object (8) present in the environment map (6) and the structurally stationary feature (12) present in the scale map (10),
e1) the correction matrix creating device (36) is designed to create an updated correction matrix, in particular for objects (8) represented at a distorted position in the updated environment map (6), wherein by applying the updated correction matrix to an updated scanned position of the object (8) present in the environment map (6), which was allocated to the structurally stationary feature (12) by the correction command detection device (36), said updated scanned position can be converted into the scale position of the structurally stationary feature (12), as it is contained in the scale map (10),
f1) the correction command detection device (34) and the correction matrix creating device (36) are designed to perform the allocation and the correction matrix creation at least for a first object (8) present in the environment map (6) and for a second object (8) present in the environment map (6),
g1) the equalizing device (38) is designed to equalize the environment map (6) with the aid of at least one updated first correction matrix created for the first object (8) and one updated second correction matrix created for the second object (8),
h1) the output device (40) is designed to output the equalized environment map (6) as an updated localization map for determining the position of the industrial truck (2) in the logistics facility (4).

## Revendications

1. Procédé pour générer une carte de localisation afin de déterminer la position d'un chariot de manutention (2) dans une installation logistique (4), comprenant les étapes suivantes :
a) génération d'une carte d'environnement (6) d'une zone de détection de l'installation logistique (4) par balayage d'objets (8) présents dans la zone de détection,
le procédé de génération d'une carte de localisation étant **caractérisé par** les étapes supplémentaires suivantes :
b) acquisition d'une carte à l'échelle (10) au moins de la zone de détection, la carte à l'échelle (10) incluant des éléments structurels constructifs fixes (12) de l'installation logistique (4),
c) affichage de la carte d'environnement (6) générée et de la carte à l'échelle (10) sur un dispositif d'affichage (24),
d) enregistrement d'une instruction de correction relative à une association entre un objet (8) présent dans la carte d'environnement (6) et un élément structurel constructif fixe (12) présent dans la carte à l'échelle (10),
e) génération d'une matrice de correction, en particulier pour les objets (8) représentés en une position erronée dans la carte d'environnement (6) ; en appliquant la matrice de correction à une position scannée de l'objet (8) présent dans la carte d'environnement (6), qui a été associée à l'élément structurel constructif fixe (12) à l'étape d), cette position scannée est apte à être convertie en une position à l'échelle de l'élément structurel constructif fixe (12) telle qu'elle est contenue dans la carte à l'échelle (10),
f) mise en œuvre des étapes d) et e) au moins pour un premier objet (8) présent dans la carte d'environnement (6) et pour un deuxième objet (8) présent dans la carte d'environnement (6),
g) rectification de la carte d'environnement (6) au moyen d'au moins une première matrice de correction générée pour le premier objet (8) et d'une deuxième matrice de correction générée pour le deuxième objet (8),
h) émission de la carte d'environnement (6) rectifiée à l'étape g) sous forme de carte de localisation pour la détermination de la position du chariot de manutention (2) dans l'installation logistique (4).

2. Procédé selon la revendication 1, dans lequel, à l'étape a), la carte d'environnement (6) est générée en effectuant une pluralité de balayages individuels d'objets (8) présents dans la zone de détection et en assemblant les balayages individuels par enregistrement pour former la carte d'environnement (6), la carte d'environnement (6) étant en particulier un nuage de points ou une grille d'occupation.

3. Procédé selon la revendication 1 ou la revendication 2, dans lequel l'installation logistique (2) a été réalisée sur la base de la carte à l'échelle (10).

4. Procédé selon l'une des revendications 1 à 3, dans lequel la carte d'environnement (6) comprend une première classe d'objets (8), qui sont aptes à être attribués ou sont attribués à des éléments structurels constructifs fixes (12), et une deuxième classe d'objets (8) est présente, qui sont aptes à être attribués ou sont attribués à des éléments structurels constructifs (12) non-fixes, la carte d'environnement corrigée (6), qui est éditée à l'étape h) en tant que carte de localisation pour la détermination de la position du chariot de manutention (2), comprenant à la fois des objets (8) de la première et de la deuxième classes.

5. Procédé selon l'une des revendications 1 à 4, dans lequel, à l'étape d), une instruction de correction générée par un utilisateur est enregistrée.

6. Procédé selon l'une des revendications 1 à 4, dans lequel l'instruction de correction enregistrée à l'étape d) définit une zone de recherche (28) dans la carte d'environnement (6) et/ou de la carte à l'échelle (10) affichée à l'étape c), l'objet (8) présent dans la carte d'environnement (6) et l'élément structurel constructif fixe (12) présent dans la carte à l'échelle (10) étant présents dans la zone de recherche (28), l'association entre l'objet (8) présent dans la carte d'environnement (6) et l'élément structurel constructif fixe (12) présent dans la carte à l'échelle (12) étant effectuée par un algorithme de reconnaissance d'objets ou étant effectuée par un utilisateur au moyen d'un algorithme de reconnaissance d'objets.

7. Procédé selon l'une des revendications 1 à 6, dans lequel l'étape d) est mise en œuvre pendant l'exécution de l'étape a).

8. Procédé d'actualisation d'une carte de localisation, dans lequel une carte de localisation est générée selon un procédé selon l'une des revendications 1 à 7 et les étapes qui suivent sont mises en œuvre pour actualiser cette carte de localisation :
a1) génération d'une carte d'environnement actualisée (6) de la zone de détection de l'installation logistique (2) par balayage des objets (8) présents dans la zone de détection et d'autres objets (8) non détectés lors de la génération de la carte d'environnement ou détectés à un autre emplacement,
b1) utilisation de la carte à l'échelle (12) enregistrée à l'étape b),
c1) affichage d'une carte d'environnement actualisée (6) générée et de la carte à l'échelle (12) sur le dispositif d'affichage (24),
d1) utilisation de l'association enregistrée à l'étape d) entre l'objet (8) présent dans la carte d'environnement (6) et l'élément structurel constructif fixe (12) présent dans la carte à l'échelle (10),
e1) génération d'une matrice de correction actualisée, en particulier pour les objets (8) représentés en une position erronée dans la carte d'environnement (6) actualisée ; en appliquant la matrice de correction actualisée à une position scannée actualisée de l'objet (8) présent dans la carte d'environnement (6), qui a été associée à l'élément structurel constructif fixe (12) à l'étape d1), cette position scannée actualisée est apte à être convertie en convertie en la position à l'échelle de l'élément structurel constructif fixe (12) telle qu'elle est contenue dans la carte à l'échelle (10),
f1) mise en œuvre des étapes d1) et e1) au moins pour un premier objet (8) présent dans la carte d'environnement (6) et pour un deuxième objet (8) présent dans la carte d'environnement (6),
g1) rectification de la carte d'environnement (6) au moyen d'au moins une première matrice de correction actualisée générée pour le premier objet (8) et d'une deuxième matrice de correction actualisée générée pour le deuxième objet (8),
h1) émission de la carte d'environnement (6) rectifiée à l'étape g1) sous forme de carte de localisation actualisée pour la détermination de la position du chariot de manutention (2) dans l'installation logistique (4).

9. Dispositif pour générer une carte de localisation afin de déterminer la position d'un chariot de manutention (2) dans une installation logistique (4), comprenant :
a) un dispositif de balayage (14) pour générer une carte d'environnement (6) d'une zone de détection de l'installation logistique (2), le dispositif de balayage (14) étant conçu de manière à balayer les objets (8) présents dans la zone de détection,
le dispositif étant en outre **caractérisé par** :
b) un dispositif de détection (32), qui est conçu de manière à détecter une carte à l'échelle (10) au moins de la zone de détection, la carte à l'échelle (10) présentant des éléments structurels constructifs fixes (12),
c) un dispositif d'affichage (24), qui est conçu de manière à afficher la carte d'environnement (6) générée et la carte à l'échelle (10),
d) un dispositif (34) de détection d'instruction de correction, qui est conçu de manière à détecter une instruction de correction concernant une association entre un objet (8) présent dans la carte d'environnement (6) et un élément structurel constructif fixe (12) présent dans la carte à l'échelle (10),
e) un dispositif (36) de génération de matrice de correction, qui est conçu de manière à générer une matrice de correction, en particulier pour des objets (8) représentés en une position erronée dans la carte d'environnement (6) ; en appliquant la matrice de correction à la position scannée de l'objet (8) présent dans la carte d'environnement (6), qui est apte à être attribué ou a été attribué par le dispositif (36) de détection d'instruction de correction à l'élément structurel constructif fixe (12), cette position scannée est apte à être convertie en une position à l'échelle de l'élément structurel constructif fixe (12) telle qu'elle est contenue dans la carte à l'échelle (10),
f) le dispositif (34) de détection d'instruction de correction et le dispositif (36) de génération de matrice de correction étant conçus de manière à effectuer l'association et la génération de matrice de correction au moins pour un premier objet (8) présent dans la carte d'environnement (6) et pour un deuxième objet (8) présent dans la carte d'environnement (6),
g) un dispositif de rectification (38), qui est conçu de manière à rectifier la carte d'environnement (6) au moyen d'au moins une première matrice de correction générée pour le premier objet (8) et d'une deuxième matrice de correction générée pour le deuxième objet (8),
h) un dispositif d'émission (40), qui est conçu de manière à émettre la carte d'environnement (6) rectifiée par le dispositif de rectification (38) en tant que carte de localisation pour la détermination de la position du chariot de manutention (2) dans l'installation logistique (4).

10. Dispositif selon la revendication 9, dans lequel le dispositif de balayage (14) est conçu de manière à générer la carte d'environnement (6) en effectuant une pluralité de balayages individuels d'objets (8) présents dans la zone de détection et en assemblant les balayages individuels par enregistrement pour former la carte d'environnement (6), la carte d'environnement (6) étant en particulier un nuage de points ou une grille d'occupation.

11. Dispositif selon la revendication 9 ou la revendication 10, dans lequel la carte d'environnement (6) présente une première classe d'objets (8), qui sont aptes à être attribués ou sont attribués à des éléments structurels constructifs fixes (12), et une deuxième classe d'objets (8) est présente, qui sont aptes à être attribués ou sont attribués à des éléments structurels constructifs (12) non-fixes, la carte d'environnement corrigée (6), qui est apte à être émise ou qui est émise par le dispositif d'émission (40) en tant que carte de localisation pour la détermination de la position du chariot de manutention (2), comprenant à la fois des objets (8) de la première et de la deuxième classes.

12. Dispositif selon l'une des revendications 9 à 11, dans lequel le dispositif (34) de détection d'instruction de correction est conçu de manière à détecter une instruction de correction générée par un utilisateur.

13. Dispositif selon l'une des revendications 9 à 11, dans lequel le dispositif (34) de détection d'instruction de correction est conçu de manière à détecter une instruction de correction qui définit une zone de recherche dans la carte d'environnement (6) apte à être affichée ou affichée par le dispositif d'affichage (24) et/ou la carte à l'échelle (10), l'objet (8) présent dans la carte d'environnement (6) et l'élément structurel constructif fixe (12) présent dans la carte à l'échelle (10) étant disponibles dans la zone de recherche (28), le dispositif (34) de détection d'instruction de correction étant en outre conçu de manière à effectuer l'association entre l'objet (8) présent dans la carte d'environnement (6) et l'élément structurel constructif fixe (12) présent dans la carte à l'échelle (10) au moyen d'un algorithme de reconnaissance d'objets ou pour assister un utilisateur au moyen d'un algorithme de reconnaissance d'objets.

14. Dispositif selon l'une des revendications 9 à 13, dans lequel le dispositif (34) de détection d'instruction de correction est conçu de manière à détecter l'instruction de correction pendant que le dispositif de balayage (14) analyse la carte d'environnement (6) de la zone de détection de l'installation logistique (4).

15. Dispositif pour actualiser une carte de localisation, comprenant un dispositif selon l'une des revendications 9 à 14, avec lequel une carte de localisation est apte à être générée ou est générée, dans lequel en outre :
a1) le dispositif de balayage (14) est conçu de manière à générer une carte d'environnement (6) actualisée de la zone de détection de l'installation logistique (4) en balayant les objets (8) présents dans la zone de détection et d'autres objets (8) non détectés ou détectés à un autre emplacement lors de la génération de la carte d'environnement (6),
b1) le dispositif de détection (32) est conçu de manière à utiliser la carte à l'échelle (10) détectée,
c1) le dispositif d'affichage (54) est conçu de manière à afficher une carte d'environnement actualisée (6) générée par le dispositif de balayage (14) et la carte à l'échelle (10),
d1) le dispositif (34) de détection d'instruction de correction est conçu de manière à utiliser la correspondance détectée entre l'objet (8) présent dans la carte d'environnement (6) et l'élément structurel constructif fixe (12) présent dans la carte à l'échelle (10),
e1) le dispositif (36) de génération de matrice de correction est conçu de manière à générer une matrice de correction (6) actualisée, en particulier pour les objets (8) représentés en une position erronée dans la carte d'environnement actualisée ; en appliquant la matrice de correction actualisée à une position scannée actualisée de l'objet (8) présent dans la carte d'environnement (6), qui a été attribuée à l'élément structurel constructif fixe (12) par le dispositif (36) de détection d'instruction de correction, cette position scannée actualisée étant apte à être transférée dans la position à l'échelle de l'élément structurel constructif fixe (12) telle qu'elle est contenue dans la carte à l'échelle (10),
f1) le dispositif (34) de détection d'instruction de correction et le dispositif (36) de génération de matrice de correction sont conçus de manière à effectuer l'association et la génération de matrice de correction au moins pour un premier objet (8) présent dans une carte d'environnement (6) et un deuxième objet présent dans la carte d'environnement (6),
g1) le dispositif de rectification (38) est conçu de manière à rectifier la carte d'environnement (6) au moyen d'au moins une première matrice de correction actualisée générée pour le premier objet (8) et d'une deuxième matrice de correction actualisée générée pour le deuxième objet (8),
h1) le dispositif d'émission (40) est conçu de manière à émettre la carte d'environnement (6) rectifiée sous forme de carte de localisation actualisée pour la détermination de la position du chariot de manutention (2) dans l'installation logistique (4).
